# EUROPÄISCHE PATENTSCHRIFT

(11) **EP 4 090 581 B1**
(45) Veröffentlichungstag und Bekanntmachung des Hinweises auf die Patenterteilung: **29.04.2026**
(21) Anmeldenummer: 21700893.7
(22) Anmeldetag: 15.01.2021
(51) Int. Cl.: B62D 55/06, B62D 55/08, B62D 55/084, B62D 55/065

(54) **RAUPENFAHRZEUG, FAHRSCHIENENANORDNUNG, FAHRZEUGSYSTEM UND VERFAHREN ZUM BEFAHREN EINER FAHRSCHIENENANORDNUNG**
TRACKED VEHICLE, RUNNING RAIL ASSEMBLY, VEHICLE SYSTEM AND METHOD FOR TRAVELING ON A RUNNING RAIL ASSEMBLY
VÉHICULE À CHENILLES, ENSEMBLE DE RAILS DE ROULEMENT, SYSTÈME DE VÉHICULE ET PROCÉDÉ DE DÉPLACEMENT SUR UN ENSEMBLE DE RAILS DE ROULEMENT

(30) Priorität: 17.01.2020 DE 102020101114
(43) Veröffentlichungstag der Anmeldung: 23.11.2022
(73) Patentinhaber: MagneCat UG (haftungsbeschränkt), 95444 Bayreuth (DE)
(72) Erfinder: KEPPNER, Achim, 95445 Bayreuth (DE)
(74) Vertreter: Betten & Resch
(86) Internationale Anmeldenummer: PCT/EP2021/050782
(87) Internationale Veröffentlichungsnummer: WO 2021/144408

(56) Entgegenhaltungen:
- EP-A1- 3 643 589
- EP-A2- 1 632 132
- WO-A1-2014/121999
- WO-A1-2016/020733
- US-A- 5 433 293

## Beschreibung

Die vorliegende Erfindung betrifft ein Raupenfahrzeug sowie eine Fahrschienenanordnung für ein derartiges Raupenfahrzeug. Die Erfindung betrifft ferner ein Fahrzeugsystem, welches das Raupenfahrzeug und die Fahrschienenanordnung umfasst. Außerdem betrifft die Erfindung ein Verfahren zum Befahren der Fahrschienenanordnung mit dem Raupenfahrzeug.

Aus der DE20 2020 100 256 U1 und WO2016020733 und US5433293 ist ein gattungsgemäßes Raupenfahrzeug und Schienensystem bekannt, das eine Lastenbaugruppe und zumindest zwei Antriebsraupen umfasst, die an der Lastenbaugruppe zur Ausführung einer Bewegung längs einer Umlaufbahn der jeweiligen Antriebsraupe für eine Fahrt des Raupenfahrzeugs entlang einer Fahrtrichtung beweglich gelagert sind. Ebenfalls ist hieraus ein Fahrzeugsystem bekannt, welches das gattungsgemäße Raupenfahrzeug und eine gattungsgemäße Fahrbahnanordnung umfasst. Dabei kann das Raupenfahrzeug zwei oder mehr Paare von Antriebsraupen umfassen, die über Halteplattformen an der Lastenbaugruppe des Raupenfahrzeugs angeordnet sind. Die Halteplattformen sind um Drehachsen drehbar, die sich senkrecht zu einer Aufstandsrichtung des Raupenfahrzeugs erstrecken. Damit kann das Raupenfahrzeug eine beliebige Fahrtrichtung in der horizontalen Ebene einschlagen.

Die Bewegungsfreiheit des gattungsgemäßen Raupenfahrzeugs ist jedoch aus verschiedenen Gründen beschränkt. Die Antriebsraupen und die Halteplattformen können sich lediglich durch eine Drehung um ihre Drehachse innerhalb einer horizontalen Ebene ausrichten (zum Beispiel auf einem ebenen Untergrund wie einer Straße). Beim Befahren eines nicht horizontalen Untergrunds (zum Beispiel einer Straße mit einer Steigung) können die Antriebsraupen nicht derart ausgerichtet werden, dass eine Neigung der Lastenbaugruppe kompensiert werden kann. Die Lastenbaugruppe neigt sich somit im gleichen Umfang wie die Steigung der zu befahrenden Ebene. Da sich aufgrund von Neigungen der Lastenbaugruppe beispielsweise die darin befindlichen Güter ungewollt verschieben können oder Personen in der Lastenbaugruppe stürzen können, ist das gattungsgemäße Raupenfahrzeug somit auf im Wesentlichen horizontale Fahrbahnen beschränkt.

Es ist daher eine Aufgabe der vorliegenden Erfindung, ein gattungsgemäßes Raupenfahrzeug dahingehend weiterzuentwickeln, dass die Bewegungsfreiheitsgrade und die Agilität des Raupenfahrzeugs erhöht werden und gleichzeitig verhindert wird, dass sich das Raupenfahrzeug übermäßig neigt.

Erfindungsgemäß wird diese Aufgabe bei einem gattungsgemäßen Raupenfahrzeug dadurch gelöst, dass jede Antriebsraupe an einem jeweiligen Raupenschiff ausgebildet ist und das Raupenfahrzeug ferner Neigemittel zum Neigen der Raupenschiffe um eine jeweilige Neigungsachse, die sich im Wesentlichen senkrecht zu einer Bewegungsrichtung der jeweiligen Antriebsraupe erstreckt, und Verlagerungsmittel zum Verlagern der Raupenschiffe entlang der jeweiligen Neigungsachse zwischen einer eingefahrenen Position und einer ausgefahrenen Position umfasst, wobei die Raupenschiffe in der eingefahrenen Position unterhalb eines Unterbodens der Lastenbaugruppe angeordnet sind, und wobei die Raupenschiffe in der ausgefahrenen Position in der Fahrzeugbreitenrichtung an gegenüberliegenden Seiten über die Lastenbaugruppe hinausragen.

Die Neigemittel ermöglichen somit eine Drehung der Raupenschiffe um ihre Neigungsachse, die sich im Wesentlichen senkrecht zu einer Bewegungsrichtung der Antriebsraupen erstreckt. Durch die Neigung der Raupenschiffe kann ihre Ausrichtung relativ zu der Lastenbaugruppe und relativ zu einer Fahrbahn verändert werden, auf der das Raupenfahrzeug steht oder fährt, ohne dass sich dabei die Lastenbaugruppe neigt. Ebenfalls kann durch die Neigung der Raupenschiffe die Lastenbaugruppe angehoben werden, wodurch die Bodenfreiheit beim Fahren in unwegsamem Gelände erhöht werden kann. Grundsätzlich befinden sich die Raupenschiffe in der eingefahrenen Position unterhalb des Unterbodens der Lastenbaugruppe. Die Raupenschiffe stehen dabei nicht seitlich von der Lastenbaugruppe hervor, sondern werden bei einer Betrachtung von oberhalb des Raupenfahrzeugs von der Lastenbaugruppe verdeckt. Daher wird, wenn sich die Raupenschiffe in der eingefahrenen Position befinden, weniger Platz für die Fortbewegung des Raupenfahrzeugs benötigt. Die Verlagerungsmittel ermöglichen jedoch, dass die Raupenschiffe entlang ihrer Neigungsachsen translatorisch auch in die ausgefahrene Position verlagert werden können. In der ausgefahrenen Position werden die Raupenschiffe von oben nicht von dem Unterboden der Lastenbaugruppe abgedeckt und können sich daher um 360° um ihre Neigungsachsen neigen, ohne dabei mit der Lastenbaugruppe zu kollidieren. Einerseits kann das erfindungsgemäße Raupenfahrzeug dadurch Horizontalfahrten entlang einer horizontalen Fahrbahn oder horizontal angeordneten Fahrschienen durchführen. Andererseits können mit dem erfindungsgemäßen Raupenfahrzeug auch Schrägfahrten mit einer beliebig großen Steigung entlang einer schräg verlaufenden Fahrbahn oder von schräg angeordneten Fahrschienen durchgeführt werden, wobei sich die Lastenbaugruppe nicht neigt. Somit kann ein sicherer Transport der darin befindlichen Güter oder Personen gewährleistet werden.

Grundsätzlich ist denkbar, dass sich das erfindungsgemäße Raupenfahrzeug ausschließlich geradlinig entlang horizontaler oder schräg angeordneter Fahrbahnen und/oder Fahrschienen fortbewegt. Zweckmäßigerweise umfasst das erfindungsgemäße Raupenfahrzeug jedoch ferner Lenkmittel zum Ändern der Fahrtrichtung des Raupenfahrzeugs.

Die Lenkmittel befähigen das Raupenfahrzeug, sich nicht nur geradlinig fortzubewegen, sondern auch seine Fahrtrichtung auf einer Fahrbahn zu ändern. Somit kann sich das Raupenfahrzeug flexibel auf einer Fahrbahn fortbewegen und verschiedene Fahrmanöver durchführen bzw. Trajektorien fahren.

Gemäß einer Ausführungsform der vorliegenden Erfindung sind die Lenkmittel dazu ausgelegt, die Fahrtrichtung des Raupenfahrzeugs durch unterschiedliche Drehgeschwindigkeiten und/oder Drehrichtungen der Antriebsraupen zu ändern.

Die Fahrtrichtung des erfindungsgemäßen Raupenfahrzeugs kann somit, ähnlich wie zum Beispiel bei einem Panzer, dadurch geändert werden, dass die Antriebsraupen mit unterschiedlichen Drehrichtungen und/oder Drehgeschwindigkeiten bewegt werden. Im Vergleich zu herkömmlichen Fahrzeuglenkungen, wie zum Beispiel bei Personenkraftwagen(PKW)-Lenkungen, bei der lediglich die vorderen beiden Räder lenkbar sind und jeweils nur gleichermaßen ausgelenkt werden können, kann dadurch der Wendekreis des Raupenfahrzeugs reduziert werden, wodurch insbesondere die Agilität des Raupenfahrzeugs erhöht wird.

In einer weiteren Ausführungsform der vorliegenden Erfindung sind die Lenkmittel dazu ausgelegt, die Fahrtrichtung des Raupenfahrzeugs durch Drehung der Raupenschiffe um jeweils zugeordnete Lenkachsen zu ändern.

Durch die individuelle Drehung der einzelnen Raupenschiffe um ihre Lenkachsen kann ihr jeweiliger Spurwinkel flexibel geändert werden. Mit einer entsprechenden Ausrichtung der einzelnen Raupenschiffe relativ zueinander kann der Wendekreis des Raupenfahrzeugs bei einer Kurvenfahrt reduziert werden. Ebenfalls wird dadurch die Durchführung neuer Fahrmanöver bzw. das Fahren von Trajektorien ermöglicht, die mit herkömmlichen Fahrzeugen nicht durchführbar sind. So kann das Raupenfahrzeug bei stillstehender Lastenbaugruppe die Raupenschiffe um 90° um ihre Lenkachsen drehen, um eine Querfahrt durchzuführen, wobei die Ausrichtung der Lastenbaugruppe in der Ebene dabei nicht verändert wird.

Die Raupenschiffe können in der eingefahrenen Position von ihrer jeweiligen Lenkachse in einem vorderen Endbereich oder in einem hinteren Endbereich durchstoßen werden.

Beim Lenken der Raupenschiffe drehen sich die Raupenschiffe relativ zu der Fahrbahn um einen Drehpunkt, der sich innerhalb einer Aufstandsoberfläche befindet, die in einem Kontaktbereich zwischen jeder Antriebsraupe und der Fahrbahn gebildet wird. Wenn die Raupenschiffe in der eingefahrenen Position um ihre jeweilige Neigungsachse geneigt werden, verändert sich die Position der Aufstandsoberfläche an den Antriebsraupen hin zu einem vorderen Endbereich oder zu einem hinteren Endbereich des Raupenschiffs. Wenn die Lenkachsen das jeweilige Raupenschiff in diesem vorderen oder hinteren Endbereich durchstoßen, kann beim Lenken der Raupenschiffe verhindert werden, dass sich die Lastenbaugruppe unerwünscht kreiselartig bewegt.

Gemäß einer weiteren erfindungsgemäßen Ausführungsform werden die Raupenschiffe von ihrer jeweiligen Neigungsachse in einem vorderen Endbereich oder in einem hinteren Endbereich durchstoßen.

Durch die Anordnung der Neigungsachsen in einem vorderen oder hinteren Endbereich der Raupenschiffe ist es möglich, dass sich die Raupenschiffe bei einer Drehung um ihre Neigungsachsen auf eine Spitze stellen und dabei die Lastenbaugruppe vertikal anheben. Als Spitze wird dabei derjenige Endbereich des Raupenschiffs bezeichnet, der nicht von seiner Neigungsachse durchstoßen wird. In der eingefahrenen Position der Raupenschiffe kann dadurch verhindert werden, dass die Raupenschiffe beim Neigen mit dem Unterboden der Lastenbaugruppe kollidieren. Außerdem ermöglicht diese Anordnung der Neigungsachsen, dass in der eingefahrenen Position und in der ausgefahrenen Position auch eine Neigung der Raupenschiffe um einen gewissen Winkel in eine Drehrichtung durchgeführt werden kann, bei der sich die Lastenbaugruppe nicht oder nur minimal anhebt.

In einer bevorzugten Ausführungsform der vorliegenden Erfindung schneidet die jeweilige Lenkachse jedes Raupenschiffs seine jeweilige Neigungsachse.

Wenn die Lenkachsen der Raupenschiffe ihre jeweiligen Neigungsachsen schneiden, können die Raupenschiffe derart geneigt werden, dass sich die Aufstandsoberfläche der jeweiligen Antriebsraupe an einem Endbereich des Raupenschiffs befindet, der von der jeweiligen Lenkachse und Neigungsachse durchstoßen wird. Die Lenkachse, die Neigungsachse und die Aufstandsoberfläche der Antriebsraupen befinden sich in dieser Konfiguration alle an demselben Endbereich des Raupenschiffs. Dadurch kann bei einer Lenkung und/oder einer Neigung der Raupenschiffe ein direkter und geradliniger Kraftfluss zwischen dem Raupenfahrzeug und der Fahrbahn gewährleistet werden und es entstehen keine unerwünschten Biegemomente.

In einer weiteren erfindungsgemäßen Ausführungsform umfasst das Raupenfahrzeug ferner Klemmmittel zum Verlagern von zumindest zwei Raupenschiffen, die in der Fahrzeugbreitenrichtung nebeneinander angeordnet sind, entlang jeweiliger Klemmachsen, die sich im Wesentlichen in einer Fahrzeuglängsrichtung erstrecken.

Damit sich das Raupenfahrzeug entlang vertikal verlaufender Fahrschienenanordnungen fortbewegen kann ist es erforderlich, dass das Raupenfahrzeug an den Fahrschienen festgeklemmt wird. Mithilfe der Klemmmittel können die Raupenschiffe entlang ihrer Klemmachsen gegeneinander verlagert werden und in Wechselwirkung mit den vertikal angeordneten Fahrschienen eine Klemmkraft erzeugen. Die Klemmkraft verhindert beim Befahren von vertikal angeordneten Fahrschienen ein Abrutschen der Antriebsraupen an den Fahrschienen. Somit wird das Raupenfahrzeug an der vertikalen Fahrschienenanordnung festgeklemmt und ein Befahren des Raupenfahrzeugs in vertikaler Richtung wird ermöglicht.

Erfindungsgemäß wird ferner eine Fahrschienenanordnung vorgeschlagen, die zumindest zwei Fahrschienen umfasst, die im Wesentlichen parallel zueinander angeordnet sind, wobei jede der Fahrschienen eine Struktur mit Vorsprüngen und Vertiefungen aufweist, die dazu ausgelegt ist, in formschlüssigem und/oder kraftschlüssigem Eingriff mit Antriebsraupen eines erfindungsgemäßen Raupenfahrzeugs zu sein.

Die Fahrschienen können in einer beliebigen Richtung im Raum angeordnet sein und bilden eine vorbestimmte Trajektorie, entlang derer das Raupenfahrzeug fahren kann. Dabei ist es möglich, die Fahrschienen weitgehend unabhängig von den Umgebungsbedingungen an beliebigen Orten anzuordnen, wie z.B. an oder in Gebäuden, über Schluchten, an steilen Hängen, etc. Die möglichen Fahrwege für das Raupenfahrzeug können somit flexibel gestaltet werden. Beim Befahren der Fahrschienen sind die Antriebsraupen in formschlüssigem und/oder kraftschlüssigem Eingriff mit deren Struktur, wodurch gewährleistet wird, dass sich das Raupenfahrzeug sicher auf der Fahrschienenanordnung fortbewegen kann und nicht davon abrutscht.

Vorzugsweise ist die Struktur in Form einer strukturierten Oberfläche einer massiven Fahrschiene bereitgestellt.

Die strukturierten Oberflächen der jeweiligen Fahrschienen sind dazu ausgelegt, mit den Antriebsraupen des Raupenfahrzeugs in Kontakt zu sein und ermöglichen somit einen festen Eingriff. Insbesondere wenn die Fahrschienen nicht horizontal, sondern in einem steilen Winkel angeordnet sind, können die strukturierten Oberflächen an den Fahrschienen verhindern, dass die Antriebsraupen des Raupenfahrzeugs den Eingriff mit den Fahrschienen verlieren und dadurch abrutschen. Somit kann die Sicherheit für das Raupenfahrzeug beim Befahren der Fahrschienen erhöht werden.

Die erfindungsgemäße Fahrschienenanordnung kann ferner zumindest ein Schrägfahrmodul umfassen, wobei das Schrägfahrmodul die zumindest zwei Fahrschienen umfasst, die dazu ausgelegt sind, an einer umgebenden Tragstruktur derart befestigt zu sein, dass sie parallel zueinander und schräg von einer unteren Fahrbahn zu einer ersten oberen Fahrbahn verlaufen, wobei sich die erste obere Fahrbahn in einer vorbestimmten Höhe relativ zu der unteren Fahrbahn befindet, und wobei die zwei Fahrschienen horizontal voneinander um eine Distanz beabstandet sind, die im Wesentlichen der Distanz der Raupenschiffe in der ausgefahrenen Position in der Fahrzeugbreitenrichtung entspricht, und wobei das Schrägfahrmodul zumindest zwei bogenförmige Übergangselemente umfasst, wobei jedes Übergangselement an einem oberen Endbereich einer jeweiligen Fahrschiene angeordnet ist und dazu ausgelegt ist, die jeweilige Fahrschiene mit der ersten oberen Fahrbahn zu verbinden.

Entlang des Schrägfahrmoduls kann sich das Raupenfahrzeug in der dritten Dimension fortbewegen und sich zwischen zwei Fahrbahnen bewegen, die sich in verschiedenen Höhen befinden. Das Schrägfahrmodul umfasst zwei Fahrschienen und ist somit dazu geeignet, von Raupenfahrzeugen mit zwei Raupenschiffen befahren zu werden. Zum Befahren des Schrägfahrmoduls befinden sich die Raupenschiffe in der ausgefahrenen Position und sind um ihre Neigungsachsen derart geneigt, dass die Antriebsraupen im Wesentlichen parallel zu den Fahrschienen positioniert sind. Da sich die Raupenschiffe dabei in der ausgefahrenen Position befinden und die Fahrschienen horizontal um die gleiche Distanz voneinander beabstandet sind, wie die Raupenschiffe in der ausgefahrenen Position in der Fahrzeugbreitenrichtung, kann die Lastenbaugruppe in einer horizontalen Ausrichtung zwischen den Fahrschienen aufgenommen werden und neigt sich beim Befahren der Fahrschienenanordnung nicht. Die Übergangselemente bilden bogenförmige Verbindungselemente zwischen den Fahrschienen des Schrägfahrmoduls und der ersten oberen Fahrbahn und ermöglichen somit einen Übergang des Raupenfahrzeugs zwischen dem Schrägfahrmodul und der ersten oberen Fahrbahn. Aufgrund der bogenförmigen Gestalt der Übergangselemente müssen die Raupenschiffe beim Übergang zwischen den Fahrschienen des Schrägfahrmoduls und der ersten oberen Fahrbahn keine Kanten oder desgleichen überwinden.

Gemäß einer weiteren erfindungsgemäßen Ausführungsform umfasst die Fahrschienenanordnung ein erstes Schrägfahrmodul und ein zweites Schrägfahrmodul, die relativ zueinander derart angeordnet sind, dass sie jeweils schräg von der unteren Fahrbahn zu der ersten oberen Fahrbahn verlaufen, wobei die Fahrschienen des ersten Schrägfahrmoduls und des zweiten Schrägfahrmoduls im Wesentlichen parallel zueinander sind, und wobei das erste Schrägfahrmodul und das zweite Schrägfahrmodul horizontal um eine Distanz beabstandet sind, die im Wesentlichen einer Distanz der Neigungsachsen der Raupenschiffe in einer Geradeausfahrposition in der Fahrzeuglängsrichtung entspricht.

Da die Fahrschienenanordnung ein erstes Schrägfahrmodul und ein zweites Schrägfahrmodul und somit vier Fahrschienen umfasst, kann sie sowohl von Raupenfahrzeugen mit zwei Raupenschiffen als auch von Raupenfahrzeugen mit vier Raupenschiffen befahren werden. In der Ausführungsform, in der das Raupenfahrzeug vier Raupenschiffe umfasst, sind die Antriebsraupen aller vier Raupenschiffe jeweils mit einer entsprechenden Fahrschiene in Kontakt. Auch in dieser Ausführungsform entspricht die Distanz zwischen den Fahrschienen eines Schrägfahrmoduls der Distanz der Raupenschiffe in der ausgefahrenen Position in der Fahrzeugbreitenrichtung und ist größer als die Breite der Lastenbaugruppe. Während des Befahrens der Fahrschienenanordnung kann die Lastenbaugruppe des Raupenfahrzeugs daher zwischen den Fahrschienen aufgenommen werden. Darüber hinaus entspricht in dieser Ausführungsform die Distanz zwischen dem ersten Schrägfahrmodul und dem zweiten Schrägfahrmodul der Distanz der Neigungsachsen der Raupenschiffe, die sich in der Geradeausfahrposition befinden, in der Fahrzeuglängsrichtung. Daher kann die Fahrschienenanordnung derart befahren werden, dass lediglich die Raupenschiffe in der ausgefahrenen Position parallel zu den Fahrschienen geneigt sind und die Lastenbaugruppe horizontal ausgerichtet und nicht geneigt ist.

Grundsätzlich kann die Fahrschienenanordnung dazu ausgelegt sein, eine untere Fahrbahn mit lediglich einer ersten oberen Fahrbahn zu verbinden. Erfindungsgemäß ist es jedoch auch möglich, dass eine Mehrzahl von Schrägfahrmodulen zur Verbindung der unteren Fahrbahn mit der ersten oberen Fahrbahn sowie der ersten oberen Fahrbahn mit einer darüber angeordneten zweiten oberen Fahrbahn derart übereinander angeordnet ist, dass ihre Fahrschienen paarweise miteinander fluchten, und dass Durchgangsöffnungen zwischen den übereinander angeordneten Schrägfahrmodulen vorgesehen sind, die derart dimensioniert sind, dass es den Raupenschiffen ermöglicht wird, zwischen einer Schrägfahrposition und einer Horizontalfahrposition zum Einfahren in die oder zum Ausfahren aus der Fahrschienenanordnung zu wechseln, und dass die Raupenschiffe bei einer Überquerung der Durchgangsöffnungen in der Schrägfahrposition ununterbrochen mit zumindest einem Schrägfahrmodul in Kontakt sind.

Mit der Mehrzahl von übereinander angeordneten Schrägfahrmodulen können mehrere Fahrbahnen miteinander verbunden werden, die sich in verschiedenen Höhen befinden. Somit kann das Raupenfahrzeug flexibel auf Fahrbahnen in verschiedenen Höhen fahren, wodurch verschiedene Fahrmanöver bzw. Trajektorien mit dem Raupenfahrzeug gefahren werden können. Die Raupenschiffe können die Durchgangsöffnungen beim Befahren der Fahrschienenanordnung überqueren und die Schrägfahrt fortsetzen, indem sie beim Erreichen der Durchgangsöffnungen in der geneigten Schrägfahrposition bleiben. Die Durchgangsöffnungen sind dabei derart dimensioniert, dass jede Antriebsraupe bei ihrer Überquerung ununterbrochen mit zumindest einer der übereinander angeordneten Fahrschienen in Kontakt ist. Dadurch kann bei der Überquerung der Durchgangsöffnungen ein kontinuierlicher Eingriff zwischen den Raupenschiffen und den Fahrschienen gewährleistet werden und ein Abrutschen des Raupenfahrzeugs kann verhindert werden. Die Durchgangsöffnungen ermöglichen jedoch auch, dass das Raupenfahrzeug aus der Fahrschienenanordnung auf eine Fahrbahn oder von einer Fahrbahn auf die Fahrschienenanordnung fahren kann. Beim Erreichen der Durchgangsöffnung wechseln die Raupenschiffe dabei zwischen der Horizontalfahrposition und der Schrägfahrposition, wodurch die Schrägfahrt gestartet oder beendet werden kann.

Gemäß einer weiteren erfindungsgemäßen Ausführungsform umfasst die Fahrschienenanordnung zumindest ein Vertikalfahrmodul, wobei das Vertikalfahrmodul ein erstes Paar von Fahrschienen und ein zweites Paar von Fahrschienen umfasst, die parallel zueinander angeordnet sind und dazu ausgelegt sind, in formschlüssigem und/oder kraftschlüssigem Eingriff mit Antriebsraupen eines erfindungsgemäßen Raupenfahrzeugs zu sein, und an einer umgebenden Tragstruktur derart befestigt zu sein, dass sie vertikal von einer unteren Fahrbahn zu einer ersten oberen Fahrbahn verlaufen, wobei sich die erste obere Fahrbahn in einer vorbestimmten Höhe relativ zu der unteren Fahrbahn befindet, und wobei das Vertikalfahrmodul zumindest zwei Übergangselemente umfasst, die dazu ausgelegt sind, an der ersten oberen Fahrbahn in der vorbestimmten Höhe benachbart zu oberen Endbereichen der Fahrschienen derart schräg angeordnet zu sein, dass die Struktur jedes Übergangselements einer Struktur einer entsprechenden Fahrschiene gegenüberliegt, wobei die Fahrschienen jedes Paars von Fahrschienen voneinander um eine Distanz beabstandet sind, die im Wesentlichen der Distanz der Raupenschiffe in der ausgefahrenen Position in der Fahrzeugbreitenrichtung entspricht, und wobei das erste Paar von Fahrschienen von dem zweiten Paar von Fahrschienen um eine Distanz beabstandet ist, die im Wesentlichen der Distanz der Neigungsachsen der Raupenschiffe in der Geradeausfahrposition in der Fahrzeuglängsrichtung entspricht.

Entlang des Vertikalfahrmoduls kann sich das Raupenfahrzeug in der dritten Dimension in einer vertikalen Richtung fortbewegen und sich zwischen zwei Fahrbahnen bewegen, die sich in verschiedenen Höhen befinden. Da die Fahrschienenanordnung ein erstes Paar von Fahrschienen und ein zweites Paar von Fahrschienen umfasst, kann sie insbesondere von Raupenfahrzeugen mit vier Raupenschiffen befahren werden. Zum Befahren des Vertikalfahrmoduls befinden sich die Raupenschiffe in der ausgefahrenen Position und sind derart geneigt, dass jede Antriebsraupe in formschlüssigem und/oder kraftschlüssigem Eingriff mit einer entsprechenden Fahrschiene ist. Die Lastenbaugruppe kann daher beim Befahren der Fahrschienenanordnung in einer horizontalen Ausrichtung zwischen den Fahrschienen aufgenommen werden und neigt sich dabei nicht. Aufgrund der vertikalen Anordnung des ersten und zweiten Paares von Fahrschienen ist die Fahrschienenanordnung platzsparend und kann an verschiedenen Orten, wie zum Beispiel an oder in Gebäuden, Lagerregalen, Bergen, Baustellen, etc. eingesetzt werden. So kann die Fahrschienenanordnung beim Einsatz innerhalb eines Gebäudes zusammen mit dem Raupenfahrzeug als eine Art Aufzug fungieren. Das Vertikalfahrmodul umfasst zumindest zwei Übergangselemente, die nicht integral mit den Fahrschienen gebildet sind, sondern gegenüberliegend zu den oberen Endbereichen der Fahrschienen an der ersten oberen Fahrbahn vorgesehen sind. Diese ermöglichen einen Übergang des Raupenfahrzeugs zwischen dem Vertikalfahrmodul und der ersten oberen Fahrbahn.

Die Struktur kann gemäß einer Ausführungsform an jeder der Fahrschienen derart angeordnet sein, dass bei einem Verlagern der Raupenschiffe in Richtung der Struktur in einer Vertikalfahrposition mittels der Klemmmittel eine Klemmkraft oder Spannkraft zwischen den Raupenschiffen und den Fahrschienen in horizontaler Richtung erzeugt wird.

Zum Befahren des Vertikalfahrmoduls befinden sich die Raupenschiffe in der Vertikalfahrposition, in der die Raupenschiffe um 90° relativ zu der Horizontalfahrposition um ihre Neigungsachse geneigt sind. In dieser Position muss zwischen den Raupenschiffen und der Fahrschienenanordnung eine ausreichend hohe Klemmkraft oder Spannkraft wirken, damit das Raupenschiff nicht an den Fahrschienen abrutscht. Die Raupenschiffe können in der Vertikalfahrposition mit Hilfe der Klemmmittel in Richtung der Struktur verfahren werden, wodurch eine Klemmkraft oder eine Spannkraft zwischen den Raupenschiffen und Fahrschienen erzeugt wird. Diese Klemmkraft oder Spannkraft stellt die notwendige Haltekraft bereit, die notwendig ist, damit das Raupenfahrzeug das Vertikalfahrmodul sicher befahren kann, ohne dabei abzurutschen.

Grundsätzlich kann die Fahrschienenanordnung dazu ausgelegt sein, eine untere Fahrbahn mit lediglich einer ersten oberen Fahrbahn zu verbinden. Es ist jedoch auch möglich, dass eine Mehrzahl von Vertikalfahrmodulen zur Verbindung der unteren Fahrbahn mit der ersten oberen Fahrbahn sowie der ersten oberen Fahrbahn mit einer darüber angeordneten zweiten oberen Fahrbahn derart übereinander angeordnet ist, dass ihre Fahrschienen paarweise miteinander fluchten, und Durchgangsöffnungen zwischen den übereinander angeordneten Vertikalfahrmodulen vorgesehen sind, die derart dimensioniert sind, dass es den Raupenschiffen ermöglicht wird, zwischen einer Vertikalfahrposition und einer Horizontalfahrposition zum Einfahren in die oder zum Ausfahren aus der Fahrschienenanordnung zu wechseln, und dass die Raupenschiffe bei einer Überquerung der Durchgangsöffnungen in der Vertikalfahrposition ununterbrochen mit zumindest einem Vertikalfahrmodul in Kontakt sind.

Mit der Mehrzahl von übereinander angeordneten Vertikalfahrmodulen können mehrere Fahrbahnen miteinander verbunden werden, die sich in verschiedenen Höhen befinden. Somit kann das Raupenfahrzeug flexibel auf Fahrbahnen in verschiedenen Höhen fahren, wodurch verschiedene Fahrmanöver bzw. Trajektorien mit dem Raupenfahrzeug gefahren werden können. So kann die Fahrschienenanordnung beispielsweise an oder in einem Gebäude zusammen mit dem Raupenfahrzeug als eine Art Aufzug fungieren, der mehrere Etagen miteinander verbindet. Die Raupenschiffe können die Durchgangsöffnungen beim Befahren der Fahrschienenanordnung überqueren und die Vertikalfahrt fortsetzen, indem Sie beim Erreichen der Durchgangsöffnungen in der geneigten Vertikalfahrposition bleiben. Die Durchgangsöffnungen sind dabei derart dimensioniert, dass jede Antriebsraupe bei ihrer Überquerung ununterbrochen mit zumindest einer der übereinander angeordneten Fahrschienen in Kontakt ist. Dadurch kann bei der Überquerung der Durchgangsöffnungen ein kontinuierlicher Eingriff zwischen den Raupenschiffen und den Fahrschienen gewährleistet werden und ein Abrutschen des Raupenfahrzeugs kann verhindert werden. Die Durchgangsöffnungen ermöglichen jedoch auch, dass das Raupenfahrzeug aus der Fahrschienenanordnung auf eine Fahrbahn oder von einer Fahrbahn auf die Fahrschienenanordnung fahren kann. Beim Erreichen der Durchgangsöffnung wechseln die Raupenschiffe dabei zwischen der Horizontalfahrposition und der Vertikalfahrposition, wodurch die Vertikalfahrt gestartet oder beendet werden kann.

Des Weiteren wird erfindungsgemäß ein Fahrzeugsystem vorgeschlagen, umfassend ein erfindungsgemäßes Raupenfahrzeug und eine erfindungsgemäße Fahrschienenanordnung.

Ferner wird erfindungsgemäß ein Verfahren zum Befahren einer erfindungsgemäßen Fahrschienenanordnung mit einem erfindungsgemäßen Raupenfahrzeug vorgeschlagen, das die folgenden Schritte umfasst: Annähern des Raupenfahrzeugs an die Fahrschienenanordnung auf einer unteren Fahrbahn oder einer oberen Fahrbahn, Verlagern der Raupenschiffe entlang einer jeweiligen Neigungsachse von einer eingefahrenen Position in eine ausgefahrene Position, Neigen der Raupenschiffe um die jeweilige Neigungsachse um einen vorbestimmten Winkel von einer Horizontalfahrposition in eine Schrägfahrposition oder in eine Vertikalfahrposition, Einfahren in die Fahrschienenanordnung mittels Eingreifen der Antriebsraupen der Raupenschiffe mit der Struktur der jeweiligen Fahrschienen, Befahren der Fahrschienenanordnung zwischen einem Bereich der unteren Fahrbahn und einem Bereich der oberen Fahrbahn, Eingreifen der Antriebsraupen der Raupenschiffe mit der Struktur der jeweiligen Übergangselemente, Befahren der Übergangselemente und Neigen der Raupenschiffe um die jeweilige Neigungsachse in die Horizontalfahrposition und Ausfahren aus der Fahrschienenanordnung und Befahren der oberen Fahrbahn oder der unteren Fahrbahn.

Bei der Durchführung des erfindungsgemäßen Verfahrens fährt das Raupenfahrzeug zunächst auf einer beliebigen Fahrbahn und nähert sich der Fahrschienenanordnung an. Beim Annähern des Raupenfahrzeugs auf der unteren Fahrbahn können sich die Raupenschiffe sowohl in der eingefahrenen Position als auch in der ausgefahrenen Position befinden. Mit den Raupenschiffen in der eingefahrenen Position fährt das Raupenfahrzeug zwischen den Fahrschienen hindurch und befährt die Fahrschienenanordnung nicht. Werden die Raupenschiffe beim Annähern an die Fahrschienenanordnung hingegen in die ausgefahrene Position verlagert, kann das Raupenfahrzeug eine Fahrt entlang der Fahrschienenanordnung beginnen. Nähert sich das Raupenfahrzeug auf einer der oberen Fahrbahnen an die Fahrschienenanordnung an, können sich die Raupenschiffe wiederum in der eingefahrenen Position oder in der ausgefahrenen Position befinden. Allerdings müssen die Raupenschiffe in die ausgefahrene Position verlagert werden, bevor das Raupenfahrzeug eine Aussparung in der jeweiligen Fahrbahn erreicht, um ein Abstürzen des Raupenfahrzeugs in die Aussparung zu vermeiden. Auch auf einer der oberen Fahrbahnen kann das Raupenfahrzeug durch die Fahrschienenanordnung durchfahren, wenn die Raupenschiffe dabei in der Horizontalfahrposition bleiben und nicht geneigt werden. Eine Fahrt entlang der Fahrschienenanordnung kann durch eine entsprechende Neigung der Raupenschiffe begonnen werden. Die Raupenschiffe, die sich in der ausgefahrenen Position befinden, werden um ihre jeweiligen Neigungsachsen in die Schrägfahrposition oder die Vertikalfahrposition geneigt. In der Schrägfahrposition und in der Vertikalfahrposition sind die Raupenschiffe parallel zu den jeweiligen Fahrschienen angeordnet. Dies ermöglicht bei dem Schritt des Einfahrens in die Fahrschienenanordnung einen möglichst festen und sicheren Eingriff zwischen den Antriebsraupen und den Fahrschienen. Die Lastenbaugruppe hingegen bleibt auch beim Neigen der Raupenschiffe in die Schräg- oder Vertikalfahrposition gleich ausgerichtet und neigt sich nicht. Bei dem Schritt des Befahrens der Fahrschienenanordnung kann aufgrund des festen Eingriffs zwischen den Antriebsraupen und den Fahrschienen eine sichere Schrägfahrt oder Vertikalfahrt gewährleistet werden und ein Abrutschen der Antriebsraupen an den Fahrschienen kann verhindert werden. Wenn das Raupenfahrzeug die vorgesehene Fahrbahn erreicht hat, werden die Übergangselemente befahren und die Raupenschiffe werden von der Schräg- oder Vertikalfahrposition zurück in die Horizontalfahrposition geneigt. Anschließend verlässt das Raupenfahrzeug die Fahrschienenanordnung und befährt die gewünschte Fahrbahn. Mit dem erfindungsgemäßen Verfahren ist somit eine effiziente Schrägfahrt und/oder Vertikalfahrt des erfindungsgemäßen Raupenfahrzeugs möglich. Ebenfalls ermöglicht das Verfahren eine sichere Beförderung der Lastenbaugruppe zwischen mehreren Fahrbahnen, ohne dass die Lastenbaugruppe dabei geneigt werden muss.

Bei der Vertikalfahrt umfasst der Schritt des Eingreifens der Antriebsraupen der Raupenschiffe mit der Struktur der jeweiligen Übergangselemente vorzugsweise die folgenden Teilschritte: Verlagern von zumindest einem Raupenschiff mittels seiner Klemmmittel entlang der Klemmachse zwischen der Struktur der jeweiligen Fahrschiene und der Struktur des jeweiligen Übergangselements, und Aufrechterhalten des Eingriffs von zumindest drei Raupenschiffen mit einer der Strukturen der jeweiligen Fahrschiene oder des jeweiligen Übergangselements.

Beim Übergang zwischen dem Vertikalfahrmodul und der Fahrbahn muss gewährleistet werden, dass das Raupenfahrzeug nicht aufgrund eines Verlusts des Eingriffs mit den Fahrschienen innerhalb der Fahrschienenanordnung abrutschen bzw. abstürzen kann. Daher wird bei diesem Übergang zumindest ein Raupenschiff entlang der Klemmachse zwischen der Struktur der jeweiligen Fahrschiene und des jeweiligen Übergangselements verlagert. Zu jedem Zeitpunkt wird jedoch der Eingriff von zumindest drei Raupenschiffen mit der Struktur der jeweiligen Fahrschiene, des jeweiligen Übergangselements oder mit der Fahrbahn aufrechterhalten. Dadurch kann zu jedem Zeitpunkt ein sicherer Eingriff zwischen den Raupenschiffen und den Fahrschienen des Vertikalfahrmoduls gewährleistet werden und ein Abrutschen bzw. Abstürzen des Raupenfahrzeugs innerhalb der Fahrschienenanordnung kann verhindert werden. Somit wird die Sicherheit während des Befahrens des Vertikalfahrmoduls verbessert.

Nach dem Verlassen der Fahrschienenanordnung umfasst das erfindungsgemäße Verfahren vorzugsweise einen Schritt des Verlagerns der Raupenschiffe entlang einer jeweiligen Neigungsachse von einer ausgefahrenen Position in eine eingefahrene Position.

Wenn die Raupenschiffe wieder in die eingefahrene Position verlagert werden, nachdem das Raupenfahrzeug die vorgesehene Fahrbahn erreicht hat, wird weniger Platz in der Fahrzeugbreitenrichtung für die Fortbewegung des Raupenfahrzeugs auf der Fahrbahn benötigt. Da sich die Raupenschiffe in der eingefahrenen Position unterhalb des Unterbodens der Lastenbaugruppe befinden, kann zudem die Wahrscheinlichkeit einer Kollision zwischen den Raupenschiffen und umgebenden Objekten oder Strukturen verringert werden.

Ausführungsformen der Erfindung werden nachfolgend anhand der Figuren als nicht einschränkende Beispiele erläutert. Hierin zeigen:
Fig. 1A eine schematische perspektivische Ansicht eines Raupenschiffs eines erfindungsgemäßen Raupenfahrzeugs in der eingefahrenen Position und in einer nicht geneigten Position.
Fig. 1B eine schematische perspektivische Ansicht des Raupenschiffs aus Fig. 1A in der eingefahrenen Position und in einer geneigten Position.
Fig. 1C eine schematische perspektivische Ansicht des Raupenschiffs aus Fig. 1A in der ausgefahrenen Position und in einer nicht geneigten Position.
Fig. 2A eine schematische perspektivische Ansicht eines erfindungsgemäßen Raupenfahrzeugs mit zwei Raupenschiffen beim Beginn einer Schrägfahrt auf einer erfindungsgemäßen Fahrschienenanordnung mit Schrägfahrmodulen.
Fig. 2B eine schematische perspektivische Ansicht des Raupenfahrzeugs aus Fig. 2A beim Überqueren einer Durchgangsöffnung zwischen zwei Schrägfahrmodulen während der Schrägfahrt.
Fig. 3 eine schematische Seitenansicht einer erfindungsgemäßen Fahrschienenanordnung, die mehrere Fahrbahnen mit Schrägfahrmodulen miteinander verbindet, und verschiedene Positionen des Raupenfahrzeugs beim Befahren der Schrägfahrmodule der Fahrschienenanordnung.
Fig. 4 eine schematische perspektivische Ansicht eines erfindungsgemäßen Raupenfahrzeugs mit vier Raupenschiffen und einer erfindungsgemäßen Fahrschienenanordnung, die mehrere Fahrbahnen mit Schrägfahrmodulen miteinander verbindet.
Fig. 5A eine schematische Ansicht des erfindungsgemäßen Raupenfahrzeugs aus Fig. 4 bei Annäherung des Raupenfahrzeugs an die Fahrschienenanordnung auf einer unteren Fahrbahn bei einer Betrachtung von hinten.
Fig. 5B eine schematische Ansicht des Raupenfahrzeugs, ähnlich Fig. 5A, nach dem Verlagern der Raupenschiffe entlang ihrer Neigungsachsen von der eingefahrenen Position in die ausgefahrene Position.
Fig. 5C eine schematische Ansicht des Raupenfahrzeugs, ähnlich Fig. 5A und Fig. 5B, beim Befahren der Fahrschienenanordnung zwischen einem Bereich der unteren Fahrbahn und einem Bereich einer oberen Fahrbahn.
Fig. 6A eine schematische Seitenansicht des Raupenfahrzeugs aus Fig. 4 beim Überqueren von Durchgangsöffnungen zwischen Schrägfahrmodulen während der Schrägfahrt.
Fig. 6B eine schematische seitliche Teilansicht des Raupenfahrzeugs, ähnlich Fig. 6A, beim Befahren der Übergangselemente und dem Neigen der Raupenschiffe um die jeweilige Neigungsachse in die Horizontalfahrposition.
Fig. 6C eine schematische Seitenansicht des Raupenfahrzeugs, ähnlich Fig. 6A und Fig. 6B, beim Ausfahren aus der Fahrschienenanordnung und dem Befahren der oberen Fahrbahn.
Fig. 7 eine schematische perspektivische Ansicht eines erfindungsgemäßen Raupenfahrzeugs mit vier Raupenschiffen und einer erfindungsgemäßen Fahrschienenanordnung, die mehrere Fahrbahnen mit Vertikalfahrmodulen miteinander verbindet.
Fig. 8A eine schematische Seitenansicht des Raupenfahrzeugs aus Fig. 7 beim Neigen der Raupenschiffe um die jeweilige Neigungsachse von einer Horizontalfahrposition in eine Vertikalfahrposition.
Fig. 8B eine schematische Seitenansicht des Raupenfahrzeugs, ähnlich Fig. 8A, beim Eingreifen der Antriebsraupen der Raupenschiffe mit der Struktur der jeweiligen Fahrschienen.
Fig. 8C eine schematische Seitenansicht des Raupenfahrzeugs, ähnlich Fig. 8B, beim Überqueren von Durchgangsöffnungen zwischen zwei übereinander angeordneten Vertikalfahrmodulen während der Vertikalfahrt.
Fig. 8D eine schematische Seitenansicht des Raupenfahrzeugs, ähnlich Fig. 8C, beim Neigen von zwei in Fahrzeugbreitenrichtung nebeneinander angeordneten Raupenschiffen um die jeweilige Neigungsachse von einer Vertikalfahrposition in eine Horizontalfahrposition.
Fig. 8E eine schematische Seitenansicht des Raupenfahrzeugs, ähnlich Fig. 8D, beim Verlagern von zumindest einem Raupenschiff mittels seiner Klemmmittel entlang der Klemmachse zwischen der Struktur der jeweiligen Fahrschiene und der Struktur des jeweiligen Übergangselements.
Fig. 8F eine schematische Seitenansicht des Raupenfahrzeugs, ähnlich Fig. 8E, beim Ausfahren aus der Fahrschienenanordnung und Befahren der oberen Fahrbahn.
Fig. 9A eine schematische perspektivische Ansicht eines Raupenschiffs in der eingefahrenen Position und in der nicht geneigten Position.
Fig. 9B eine schematische perspektivische Ansicht des Raupenschiffs aus Fig. 9A während einer kombinierten Drehung um seine Lenkachse und Neigung um seine Neigungsachse.
Fig. 9C eine schematische perspektivische Ansicht des Raupenschiffs aus Fig. 9A nach der kombinierten Drehung um seine Lenkachse und Neigung um seine Neigungsachse in einer Querfahrposition.

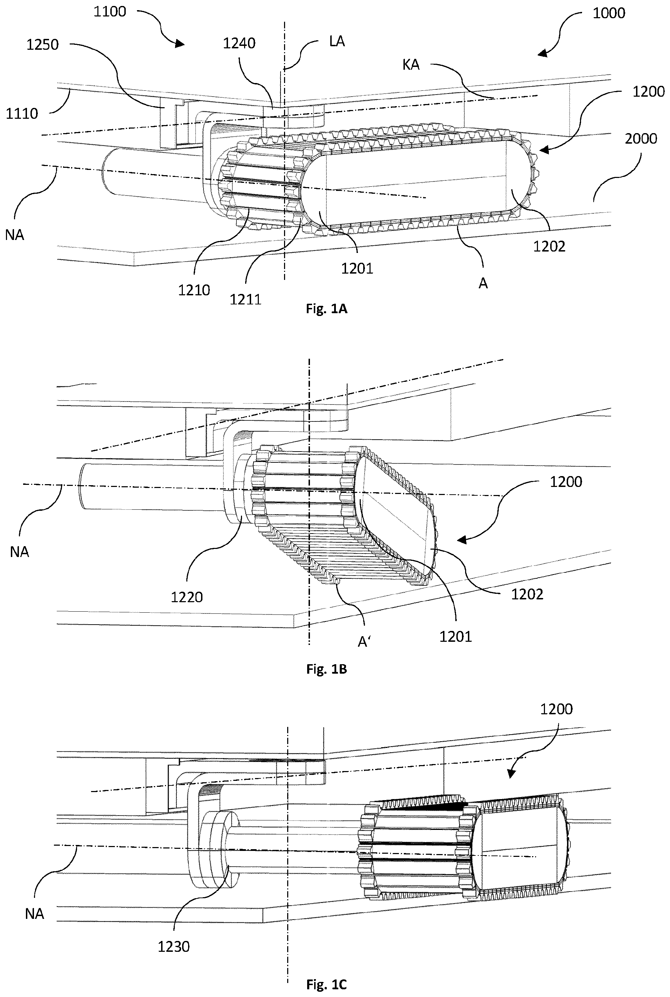

Nachfolgend werden Bewegungsfreiheitsgrade eines Raupenschiffs 1200 anhand der Figuren 1A bis 1C beschrieben. Fig. 1A zeigt eine schematische perspektivische Ansicht eines Raupenschiffs 1200 eines erfindungsgemäßen Raupenfahrzeugs 1000 in der eingefahrenen Position und in einer nicht geneigten Position. Fig. 1B zeigt eine schematische perspektivische Ansicht des Raupenschiffs 1200 aus Fig. 1A in der eingefahrenen Position und in einer geneigten Position, und Fig. 1C zeigt eine schematische perspektivische Ansicht des Raupenschiffs 1200 aus Fig. 1A in der ausgefahrenen Position und in einer nicht geneigten Position. Es ist zu beachten, dass die Figuren 1A bis 1C lediglich die Detailansicht eines Raupenschiffs 1200 des Raupenfahrzeugs 1000 zeigen. Das Raupenfahrzeug 1000 gemäß der vorliegenden Erfindung kann jedoch mehrere Raupenschiffe 1200, wie zum Beispiel zwei oder vier Raupenschiffe 1200, umfassen. Nachfolgend wird ein Raupenschiff 1200 im Detail beschrieben, wobei diese Ausführungen auf alle Raupenschiffe 1200 des Raupenfahrzeugs 1000 zutreffen.

Das Raupenschiff 1200 ist an einem Unterboden 1110 einer Lastenbaugruppe 1100 des Raupenfahrzeugs 1000 angeordnet. In der in den Figuren 1A bis 1C dargestellten Ausführungsform des erfindungsgemäßen Raupenfahrzeugs 1000 weist das Raupenschiff 1200 eine längliche Gestalt auf, die an einem vorderen Endbereich 1201 und an einem hinteren Endbereich 1202 abgerundet ist. Das Raupenschiff 1200 umfasst eine Antriebsraupe 1210, die umlaufend an dem Raupenschiff 1200 vorgesehen ist und entlang einer Umlaufbahn des Raupenschiffs 1200 beweglich gelagert ist. Die Antriebsraupe 1210 steht auf einer Aufstandsoberfläche A auf einer Fahrbahn 2000 auf. In der in den Figuren 1A bis 1C dargestellten Ausführungsform ist die Antriebsraupe 1210 als eine umlaufende Kette gebildet, die mehrere Kettenglieder umfasst und an ihrer äußeren Oberfläche eine Struktur 1211 mit Vorsprüngen und Vertiefungen aufweisen. Diese Art von Antriebsraupen 1210 ähnelt dabei jenen, die beispielsweise bei Panzerraupen oder Pistenraupen eingesetzt werden. Die Antriebsraupe 1210 des Raupenschiffs 1200 kann mit einer Antriebseinheit (nicht dargestellt) angetrieben werden, wobei sie sich entlang der Umlaufbahn um das Raupenschiff 1200 bewegt und auf der Fahrbahn 2000 im Bereich der Aufstandsoberfläche A abrollt. Beispiele für die Antriebseinheit können dabei ein elektrischer Motor, ein Verbrennungsmotor oder, ähnlich wie in der oben bereits erläuterten DE20 2020 100 256 U1, ein Linearmotor sein. Durch das Antreiben der Antriebsraupen 1210 wird das gesamte Raupenfahrzeug 1000 in Bewegung versetzt. Es ist zu beachten, dass sich die Antriebsraupe 1210 entlang des Raupenschiffs 1200 in beide Drehorientierungen bewegen kann und somit das Raupenfahrzeug 1000 in verschiedene Richtungen bewegen kann.

Das Raupenschiff 1200 umfasst ferner Neigemittel. Die Neigemittel umfassen einen Neigeaktuator 1220, der eine Drehung des Raupenschiffs 1200 um eine Neigungsachse NA ermöglicht, die sich im Wesentlichen senkrecht zu der Umlaufrichtung der Antriebsraupe 1210 erstreckt und das Raupenschiff 1200 in dem vorderen Endbereich 1201 durchstößt, wie in Fig. 1B dargestellt ist. Beispiele für die Neigeaktuatoren 1220 können dabei hydraulische, pneumatische und/oder elektrische Drehaktuatoren sein. Bei der in der Fig. 1B dargestellten Drehung des Raupenschiffs 1200 um die Neigungsachse NA verschiebt sich die Aufstandsoberfläche A' hin zu dem hinteren Endbereich 1202 des Raupenschiffs 1200 und ist aufgrund der länglichen Gestalt des Raupenschiffs 1200 kleiner als die Aufstandsoberfläche A in der nicht geneigten Position, die in Fig. 1A dargestellt ist. Aufgrund der kleineren Aufstandsoberfläche A' in der geneigten Position des Raupenschiffs 1200 entsteht beim Antreiben der Antriebsraupe 1210 weniger Reibung zwischen der Antriebsraupe 1210 und der Fahrbahn 2000, wodurch das Raupenfahrzeug 1000 effizienter fortbewegt werden kann. Durch eine entsprechende Neigung aller Raupenschiffe 1200 des Raupenfahrzeugs 1000 verändert sich ebenfalls die vertikale Distanz zwischen ihren Neigungsachsen NA und der Fahrbahn 2000, wodurch die gesamte Lastenbaugruppe 1100 angehoben wird. Durch das Anheben der Lastenbaugruppe 1100 kann beispielsweise die Bodenfreiheit beim Befahren in unwegsamem Gelände erhöht werden. Ebenfalls ist eine Drehung des Raupenschiffs 1200 um die Neigungsachse NA in einer Drehrichtung entgegen dem Uhrzeigersinn möglich, wobei sich jedoch die Aufstandsoberfläche A' hin zu dem vorderen Endbereich 1201 des Raupenschiffs 1200 verschiebt und die Distanz zwischen dem Unterboden 1110 der Lastenbaugruppe 1100 und der Fahrbahn 2000 im Wesentlichen unverändert bleibt.

Das Raupenschiff 1200 umfasst ferner Verlagerungsmittel. Die Verlagerungsmittel umfassen einen Verlagerungsaktuator 1230, der eine Verlagerung des Raupenschiffs 1200 entlang der Neigungsachse NA von einer eingefahrenen Position, wie sie in Fig. 1A dargestellt ist, in eine ausgefahrene Position, wie sie in Fig. 1C dargestellt ist, ermöglicht. Beispiele für die Verlagerungsaktuatoren 1230 können dabei hydraulische, pneumatische und/oder elektrische Linearaktuatoren sein. Bei der Verlagerung des Raupenschiffs 1200 in die ausgefahrene Position wird das Raupenschiff 1200, bei einer Betrachtung von oben, in Fahrzeugbreitenrichtung über eine Seite der Lastenbaugruppe 1100 hinaus verlagert. In der ausgefahrenen Position ist dabei eine Drehung des Raupenschiffs 1200 um 360° um die Neigungsachse NA, möglich, da das Raupenschiff 1200 seitlich über die Lastenbaugruppe 1100 hinaussteht und bei einer beliebigen Drehung um die Neigungsachse NA nicht mit dem Unterboden 1110 der Lastenbaugruppe 1100 kollidieren kann.

Das in den Figuren 1A bis 1C dargestellte Raupenschiff 1200 umfasst zudem Lenkmittel. Die Lenkmittel umfassen einen Lenkaktuator 1240, der ein Drehen des Raupenschiffs 1200 um eine Lenkachse LA ermöglicht. Der Lenkaktuator 1240 ermöglicht eine Änderung des Spurwinkels des Raupenschiffs 1200 auf der Fahrbahn 2000, was jedoch nicht in den Figuren 1A bis 1C dargestellt ist. Beispiele für die Lenkaktuatoren 1240 können dabei elektrische, hydraulische und/oder pneumatische Drehmotoren sein. Die Lenkachse LA erstreckt sich im Wesentlichen senkrecht zu dem Unterboden 1110 der Lastenbaugruppe 1100 und durchstößt das Raupenschiff 1200 in dem vorderen Endbereich 1201. Es ist zu beachten, dass sich die Lenkachse LA und die Neigungsachse NA in dem vorderen Endbereich 1201 schneiden. Wenn sich das Raupenschiff 1200 in der geneigten Position befindet, in der sich die verkleinerte Aufstandsoberfläche A' an dem vorderen Endbereich 1201 des Raupenschiffs befindet, schneidet die Lenkachse LA somit auch die Aufstandsoberfläche A' und das Raupenschiff 1200 kann um die Lenkachse LA gedreht werden, ohne dabei eine kreiselartige Bewegung des Raupenfahrzeugs 1000 relativ zur Fahrbahn 2000 zu verursachen.

Darüber hinaus umfasst das Raupenschiff 1200 Klemmmittel. Die Klemmmittel umfassen einen Klemmaktuator 1250, der ein Verlagern des Raupenschiffs 1200 entlang einer Klemmachse KA ermöglicht, die sich im Wesentlichen in Fahrzeuglängsrichtung erstreckt. Beispiele für die Klemmaktuatoren 1250 können dabei elektrisch, pneumatisch und/oder hydraulisch angetriebene Linearführungen sein. In der Ausführungsform, in der das Raupenfahrzeug 1000 vier Raupenschiffe 1200 umfasst, kann mit Hilfe der Klemmaktuatoren 1250 die Distanz derjenigen Raupenschiffe 1200, die in Fahrzeuglängsrichtung einander gegenüberliegen, also hintereinander angeordnet sind, verändert werden. Beispielsweise ist dies für die Fortbewegung entlang vertikal verlaufender Fahrschienenanordnungen erforderlich, die nachfolgend im Detail beschrieben werden. Durch eine Verlagerung der Raupenschiffe 1200 in Richtung der vertikal verlaufenden Fahrschienen mit Hilfe der Klemmaktuatoren 1250 kann in Wechselwirkung mit den Fahrschienen eine Klemmkraft zwischen dem Raupenfahrzeug 1000 und der Fahrschienenanordnung erzeugt werden, die einen sicheren Halt der Antriebsraupen 1210 beim Befahren der vertikal angeordneten Fahrschienen gewährleistet und somit ein Abrutschen verhindert.

Aufgrund der Vielzahl von Bewegungsfreiheitsgraden, die durch die Antriebsraupen 1210, die Neigeaktuatoren 1220, die Verlagerungsaktuatoren 1230, die Lenkaktuatoren 1240 und die Klemmaktuatoren 1250 ermöglicht werden, ist das erfindungsgemäße Raupenfahrzeug 1000 gemäß der in Fig. 1A, 1B und 1C dargestellten Ausführungsform agil und kann verschiedene Fahrmanöver durchführen und Trajektorien innerhalb der Ebene der Fahrbahn 2000 fahren. Es ist zu beachten, dass die Neigemittel, die Verlagerungsmittel, die Lenkmittel und die Klemmmittel neben den vorstehend beschriebenen Lenkaktuatoren 1220, den Verlagerungsaktuatoren 1230, den Lenkaktuatoren 1240 und den Klemmaktuatoren 1250 üblicherweise weitere Elemente umfassen, wie zum Beispiel eine Verkabelung oder eine elektronische Steuerungseinheit. Darüber hinaus ermöglichen die Raupenschiffe 1200 des erfindungsgemäßen Raupenfahrzeugs 1000 ein Befahren von Fahrschienenanordnungen, um mehrere Fahrbahnen in verschiedenen Höhen zu befahren, was nachfolgend im Detail beschrieben wird.

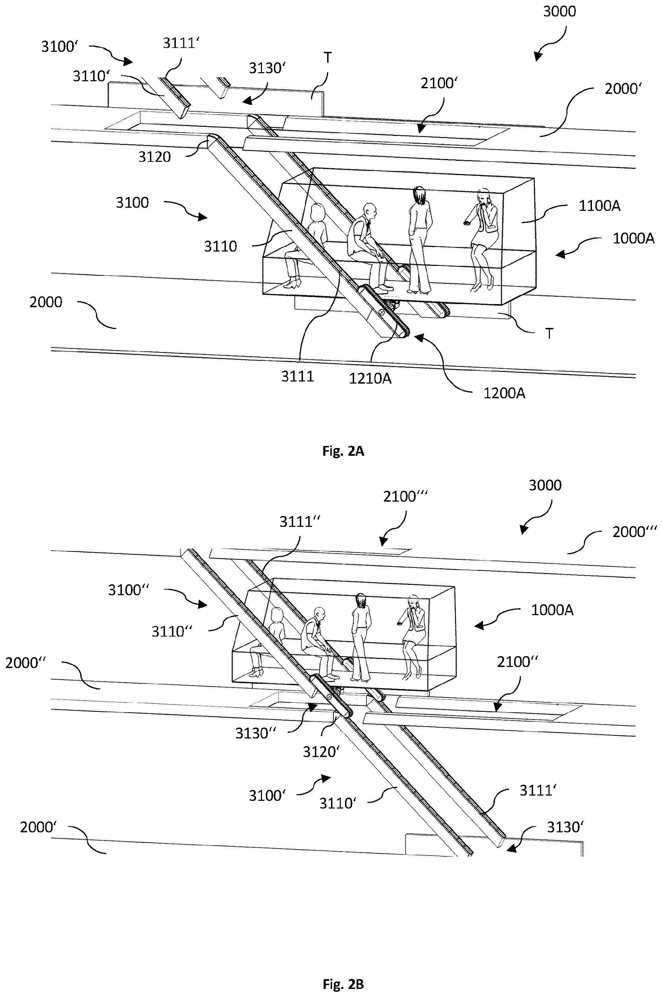

Eine einfache Ausführungsform einer solchen erfindungsgemäßen Fahrschienenanordnung 3000 ist in den Figuren 2A und 2B dargestellt. Dabei zeigt Fig. 2A eine schematische perspektivische Ansicht eines erfindungsgemäßen Raupenfahrzeugs 1000A mit zwei Raupenschiffen 1200A beim Beginn einer Schrägfahrt auf der erfindungsgemäßen Fahrschienenanordnung 3000 mit Schrägfahrmodulen 3100, 3100'. Fig. 2B zeigt eine schematische perspektivische Ansicht des Raupenfahrzeugs 1000A aus Fig. 2A beim Überqueren einer Durchgangsöffnung 3130" zwischen zwei Schrägfahrmodulen 3100', 3100" während der Schrägfahrt.

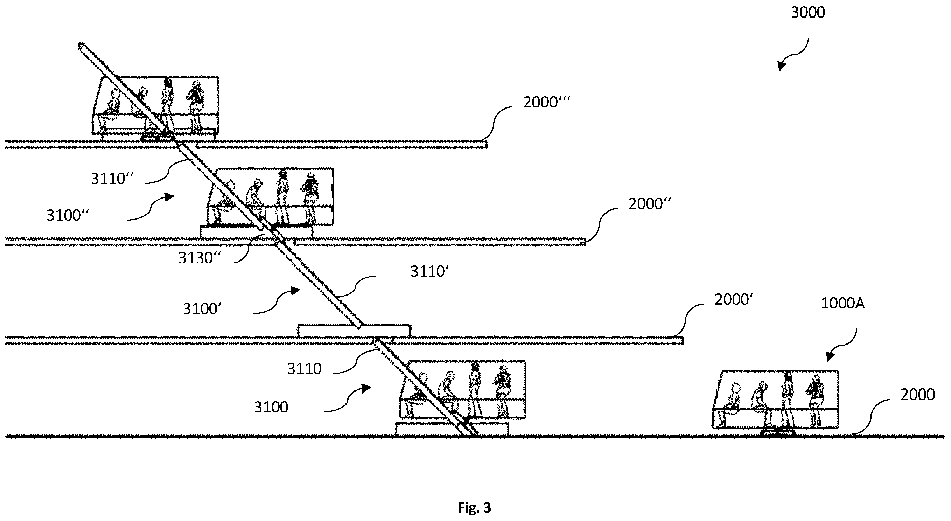

Die in Fig. 2A, Fig. 2B und Fig. 3 dargestellte Fahrschienenanordnung 3000 umfasst Schrägfahrmodule 3100, 3100', 3100", die eine untere Fahrbahn 2000 mit einer ersten oberen Fahrbahn 2000', die erste obere Fahrbahn 2000' mit einer zweiten oberen Fahrbahn 2000" und die zweite obere Fahrbahn 2000" mit einer dritten oberen Fahrbahn 2000‴ verbinden. Eine solche Fahrschienenanordnung 3000 kann zum Beispiel verwendet werden, um verschiedene Stockwerke in einem Gebäude miteinander zu verbinden. Weitere Einsatzmöglichkeiten ergeben sich zum Beispiel beim Verbinden von verschiedenen Ebenen in einem Lagerregalsystem oder auch an steilen Hängen oder Bergen.

Jedes Schrägfahrmodul 3100, 3100', 3100" umfasst zwei Fahrschienen 3110, 3110', 3110", die schräg zwischen den Fahrbahnen 2000, 2000', 2000", 2000‴ verlaufen und voneinander um eine Distanz beabstandet sind, die im Wesentlichen der Distanz der Raupenschiffe 1200A in der ausgefahrenen Position in der Fahrzeugbreitenrichtung entspricht. Die Fahrschienen 3110, 3110', 3110" sind dabei an einer umgebenden Tragstruktur T befestigt und verlaufen parallel zueinander. An einer Oberfläche weist jede Fahrschiene 3110, 3110', 3110" eine Struktur 3111, 3111', 3111" mit Vorsprüngen und Vertiefungen auf, die dazu ausgelegt ist, mit der Struktur 1211 der Antriebsraupen 1210 einen formschlüssigen Eingriff zu bilden. Die Fahrschienen 3110, 3110', 3110" sind derart relativ zueinander positioniert, dass ihre Strukturen 3111, 3111', 3111" paarweise miteinander fluchten. An einem oberen Endbereich jeder Fahrschiene 3110, 3110', 3110" ist ein Übergangselement 3120, 3120', 3120" vorgesehen, wobei das jeweilige Übergangselement 3120, 3120', 3120" die Fahrschienen 3110 mit der ersten oberen Fahrbahn 2000', die Fahrschienen 3110' mit der zweiten oberen Fahrbahn 2000" und die Fahrschienen 3110" mit der dritten oberen Fahrbahn 2000‴ verbindet und ebenfalls eine Struktur mit Vorsprüngen und Vertiefungen aufweist, die aus Gründen der Übersichtlichkeit jedoch nicht dargestellt ist. Die Fahrschienen 3110, 3110', 3110" der Schrägfahrmodule 3100, 3100', 3100" sind nicht durchgehend miteinander verbunden, sondern weisen Durchgangsöffnungen 3130', 3130" auf, die die Fahrschienen 3110, 3110' 3110" in Bereichen der Fahrbahnen 2000', 2000", 2000‴ unterbrechen. Es ist zu beachten, dass zwischen der unteren Fahrbahn 2000 und den Fahrschienen 3110 des Schrägfahrmoduls 3100 in dieser Ausführungsform keine Durchgangsöffnungen vorgesehen sind, da eine durchgehende Verbindung zwischen den Fahrschienen 3110 und der unteren Fahrbahn 2000 zur Neigung der Raupenschiffe 1200A benötigt wird.

Die in dieser Ausführungsform dargestellte Fahrschienenanordnung 3000 ist insbesondere dazu ausgelegt, von dem Raupenfahrzeug 1000A mit zwei Raupenschiffen 1200A gemäß der in den Figuren 1A bis 1C dargestellten Ausführungsform, die an zwei gegenüberliegenden Seiten der Lastenbaugruppe 1100A angeordnet sind, befahren zu werden, was nachfolgend anhand der Figuren 2A und 2B detailliert beschrieben wird. Fig. 2A zeigt dabei den Beginn einer Schrägfahrt des Raupenfahrzeugs 1000A entlang der Fahrschienenanordnung 3000. Zu Beginn der Schrägfahrt fährt das Raupenfahrzeug 1000A auf der unteren Fahrbahn 2000 auf das Schrägfahrmodul 3100 zu. Auf der unteren Fahrbahn 2000 kann das Raupenfahrzeug 1000A zwischen den Fahrschienen 3110 durch die Fahrschienenanordnung 3000 durchfahren und auf der unteren Fahrbahn 2000 weiterfahren, wenn die Raupenschiffe 1200A in der eingefahrenen Position bleiben und nicht in die ausgefahrene Position verlagert werden. Um die Schrägfahrt entlang der Fahrschienenanordnung 3000 jedoch zu beginnen, werden die Raupenschiffe 1200A in die ausgefahrene Position verlagert. Beim Auffahren auf die Fahrschienen 3110 werden die Raupenschiffe 1200A ausgehend von einer nicht geneigten Horizontalfahrposition um ihre Neigungsachse NA derart geneigt, dass sie parallel zu den schräg verlaufenden Fahrschienen 3110 ausgerichtet sind, was im Folgenden als Schrägfahrposition bezeichnet wird. Aufgrund der Distanz zwischen den Fahrschienen 3110 kann die Lastenbaugruppe 1100A dabei zwischen den Fahrschienen 3110 aufgenommen werden und neigt sich während der gesamten Schrägfahrt nicht, sondern bleibt im Wesentlichen horizontal orientiert. Die oberen Fahrbahnen 2000', 2000", 2000‴ umfassen zudem Aussparungen 2100', 2100", 2100‴, die derart dimensioniert sind, dass sich die Lastenbaugruppe 1100A beim Befahren der Schrägfahrmodule 3100, 3100', 3100" in ihrer nicht geneigten Ausrichtung zwischen den Fahrschienen 3110, 3110', 3110" hindurchbewegen kann, ohne dabei mit der zweiten oberen Fahrbahn 2000" zu kollidieren. Ein unerwünschtes Verschieben der darin befindlichen Güter oder ein Stürzen der darin befindlichen Personen kann somit auch beim Befahren von Fahrschienenanordnungen 3000 mit einer großen Steigung verhindert werden. Es ist jedoch zu beachten, dass sich aufgrund der Aussparungen 2100', 2100", 2100‴ die Raupenschiffe 1200A beim Annähern des Raupenfahrzeugs 1000A an die Fahrschienenanordnung 3000 auf einer der oberen Fahrbahnen 2000', 2000", 2000‴ in der ausgefahrenen Position befinden müssen, um ein Abstürzen des Raupenfahrzeugs 1000A in die entsprechende Aussparung 2100', 2100", 2100‴ zu verhindern. Die an den äußeren Oberflächen der Antriebsraupen 1210A befindlichen Strukturen 1211A mit Vorsprüngen und Vertiefungen greifen in dem Bereich der Aufstandsoberfläche A mit den Strukturen 3111 der Fahrschienen 3110 ein, ähnlich wie bei einer Zahnradverbindung. Dadurch entsteht zwischen den Antriebsraupen 1210A und den Fahrschienen 3110 ein formschlüssiger Eingriff, der ein Abrutschen der Antriebsraupen 1210A an den Fahrschienen 3110 verhindert und somit ein sicheres Fahren entlang der Fahrschienen 3110 ermöglicht.

In der Fig. 2B ist eine Situation während der Schrägfahrt des Raupenfahrzeugs 1000A dargestellt, in der das Raupenfahrzeug 1000A die Durchgangsöffnungen 3130" zwischen den Schrägfahrmodulen 3100', 3100" überquert, um die Schrägfahrt auf den Fahrschienen 3110" fortzusetzen. Die Durchgangsöffnungen 3130" sind derart dimensioniert, dass sie einerseits ein Verlassen der Fahrschienenanordnung 3000 und ein Befahren der zweiten oberen Fahrbahn 2000" in der Fig. 2B ermöglichen, was nachfolgend beschrieben wird. Außerdem sind die Durchgangsöffnungen 3130" derart dimensioniert, dass eine Überquerung der Raupenschiffe 1200A auf die Fahrschienen 3110" des Schrägfahrmoduls 3100" möglich ist. Bei diesem Übergang zwischen den Fahrschienen 3110' und den Fahrschienen 3110" bleiben die Raupenschiffe 1200A in der Schrägfahrposition und werden nicht zurück in die Horizontalfahrposition geneigt. Dabei wird gewährleistet, dass jede Antriebsraupe 1210A ununterbrochen mit zumindest einer der Fahrschienen 3110', 3110" in Kontakt ist. Dadurch kann auch beim Übergang zwischen den zwei Schrägfahrmodulen 3100', 3100" der Eingriff zwischen den Strukturen 1211A der Antriebsraupen 1210A und zumindest einer der Strukturen 3111', 3111" der jeweiligen Fahrschienen 3110', 3110" zu jedem Zeitpunkt aufrechterhalten werden und ein Abrutschen der Antriebsraupen 1210A an den Fahrschienen 3110', 3110" kann verhindert werden. Es ist zu beachten, dass das Raupenfahrzeug 1000A die Schrägfahrt ebenfalls von einer der oberen Fahrbahnen 2000', 2000", 2000‴ starten kann und ausgehend davon über die Fahrschienenanordnung 3000 eine beliebige höher oder tiefer gelegene andere Fahrbahn sicher erreichen kann, ohne dass sich die Lastenbaugruppe 1100A dabei ungewünscht neigt.

Fig. 3 zeigt eine schematische Seitenansicht der erfindungsgemäßen Fahrschienenanordnung 3000, die mehrere Fahrbahnen 2000, 2000', 2000", 2000‴ mit Schrägfahrmodulen 3100, 3100', 3100" miteinander verbindet, und verschiedene Positionen des Raupenfahrzeugs 1000A beim Befahren der Schrägfahrmodule 3100, 3100', 3100", der Fahrschienenanordnung 3000.

Wie vorstehend beschrieben, können mit den Schrägfahrmodulen 3100, 3100', 3100" gemäß der vorliegenden Erfindung beliebig viele Fahrbahnen 2000, 2000', 2000", 2000‴ schräg miteinander verbunden werden und von dem erfindungsgemäßen Raupenfahrzeug 1000A befahren werden. In der in Fig. 3 dargestellten Ausführungsform wird die untere Fahrbahn 2000 mit drei oberen Fahrbahnen 2000', 2000", 2000‴ verbunden. Dabei werden verschiedene Positionen des Raupenfahrzeugs 1000A bei einer Fahrt von der unteren Fahrbahn 2000 zu der dritten oberen Fahrbahn 2000‴ gezeigt. Wie in der Fig. 3 in einem rechten unteren Bereich dargestellt ist, fährt das Raupenfahrzeug 1000A zunächst auf der unteren Fahrbahn 2000 und nähert sich der Fahrschienenanordnung 3000 an, wobei sich die Raupenschiffe 1200A in der Horizontalfahrposition befinden. Als nächstes wird, ähnlich wie in Fig. 2A dargestellt ist, die Schrägfahrt begonnen, indem die Raupenschiffe 1200A in die ausgefahrene Position verlagert werden und von der Horizontalfahrposition in die Schrägfahrposition geneigt werden. Dabei kommen die Antriebsraupen 1210A der Raupenschiffe 1200A mit den Fahrschienen 3110 des Schrägfahrmoduls 3100 in Kontakt und stellen einen Eingriff zwischen den Strukturen 1211A der Antriebsraupen 1210A und den Strukturen 3111 der Fahrschienen 3110 her.

Die nächste in der Fig. 3 dargestellte Position zeigt das Raupenfahrzeug 1000A beim Überqueren der Durchgangsöffnungen 3130" auf der Höhe der zweiten oberen Fahrbahn 2000", ähnlich wie in der Fig. 2B dargestellt ist. Die Raupenschiffe 1200A bleiben dabei in der Schrägfahrposition und sind bei der Überquerung der Durchgangsöffnungen 3130" ununterbrochen in Kontakt mit zumindest einer der Fahrschienen 3110', 3110". Die Position des Raupenfahrzeugs 1000A, die in der Fig. 3 links oben dargestellt ist, zeigt das Raupenfahrzeug 1000A nach dem Ausfahren aus der Fahrschienenanordnung 3000 auf der dritten obere Fahrbahn 2000‴, wobei die Raupenschiffe 1200A wieder von der Schrägfahrposition in die Horizontalfahrposition geneigt sind. In jeder der in Fig. 3 dargestellten Positionen des Raupenfahrzeugs 1000A wird gewährleistet, dass sich die Lastenbaugruppe 1100A nicht unerwünscht neigt, sondern im Wesentlichen horizontal orientiert bleibt. Zudem kann aufgrund des Eingriffs zwischen den Strukturen 1211A der Antriebsraupen 1210A und den Strukturen 3111, 3111", 3111" der Fahrschienen 3110, 3110', 3110" eine sichere Schrägfahrt gewährleistet werden und ein Abrutschen des Raupenfahrzeugs 1000A kann verhindert werden. Es ist zu beachten, dass das Raupenfahrzeug 1000A ausgehend von jeder Fahrbahn 2000, 2000', 2000", 2000‴ mit Hilfe der Fahrschienenanordnung 3000 eine beliebige höher oder tiefer gelegene andere Fahrbahn 2000, 2000', 2000", 2000‴ erreichen kann. Das Raupenfahrzeug 1000A kann sich somit neben einer Mehrzahl von Bewegungsfreiheitsgraden innerhalb einer Fahrbahn auch flexibel in der dritten Dimension zwischen verschiedenen Fahrbahnen 2000, 2000', 2000", 2000‴ bewegen, ohne dass sich dabei die Lastenbaugruppe 1100A unerwünscht neigt.

In den vorstehenden Ausführungsformen wurde der einfache Fall betrachtet, dass das Raupenfahrzeug 1000A zwei Raupenschiffe 1200A an zwei in Fahrzeugbreitenrichtung gegenüberliegenden Seiten der Lastenbaugruppe 1100A aufweist und eine Fahrschienenanordnung 3000 mit zwei jeweils Fahrschienen 3110, 3110', 3110" befahren kann. Gemäß einer weiteren Ausführungsform der vorliegenden Erfindung ist es jedoch auch möglich, dass an dem Unterboden 1110B des Raupenfahrzeugs 1000B vier Raupenschiffe 1200B gemäß der in den Figuren 1A bis 1C beschriebenen Ausführungsform vorgesehen sind. Die vier Raupenschiffe 1200B sind dabei an Eckbereichen des Unterbodens 1110B der Lastenbaugruppe 1100B vorgesehen, ähnlich zu der Anordnung der Räder bei einem Personenkraftwagen.

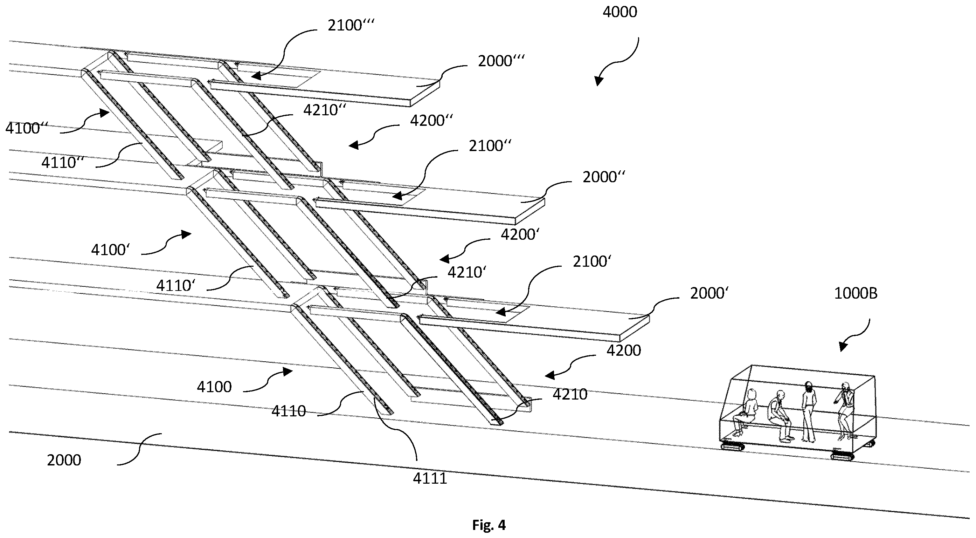

Fig. 4 zeigt eine schematische perspektivische Ansicht eines solchen erfindungsgemäßen Raupenfahrzeugs 1000B mit vier Raupenschiffen 1200B und einer erfindungsgemäßen Fahrschienenanordnung 4000, die mehrere Fahrbahnen 2000, 2000', 2000", 2000‴ mit Schrägfahrmodulen 4100, 4200, 4100', 4200', 4100", 4200" miteinander verbindet.

Die Schrägfahrmodule 4100, 4200, 4100', 4200', 4100", 4200" sind dabei ähnlich zu den Schrägfahrmodulen 3100, 3100', 3100", die in den Figuren 2A, 2B und 3 dargestellt sind, weshalb auf eine detaillierte Beschreibung von ähnlichen Elementen im Folgenden verzichtet wird. Allerdings sind, wie in der Fig. 4 dargestellt ist, zur schrägen Verbindung zweier Fahrbahnen, zum Beispiel zwischen der unteren Fahrbahn 2000 und der ersten oberen Fahrbahn 2000', jeweils ein erstes Schrägfahrmodul 4100 und ein zweites Schrägfahrmodul 4200 zwischen zwei Fahrbahnen vorgesehen. Jedes erste Schrägfahrmodul 4100, 4100', 4100" ist von dem jeweiligen zweiten Schrägfahrmodul 4200, 4200', 4200" horizontal um eine Distanz beabstandet, die im Wesentlichen der Distanz der Neigungsachsen NA der Raupenschiffe 1200B in einer Geradeausfahrposition in der Fahrzeuglängsrichtung entspricht. In anderen Worten ist somit bei der Schrägfahrt des Raupenfahrzeugs 1000B jedem der vier Raupenschiffe 1200B eine Fahrschiene 4110, 4210, 4110', 4210', 4110", 4210" zugeordnet. An einem oberen Endbereich jeder Fahrschiene 4110, 4210, 4110', 4210', 4110", 4210" sind Übergangselemente 4120, 4220, 4120', 4220', 4120", 4220" vorgesehen, welche die Fahrschienen 4110, 4210 mit der ersten oberen Fahrbahn 2000', die Fahrschienen 4110', 4210' mit der zweiten oberen Fahrbahn 2000" und die Fahrschienen 4110", 4210" mit der dritten oberen Fahrbahn 2000‴ verbinden und ebenfalls eine Struktur mit Vorsprüngen und Vertiefungen aufweisen, die aus Gründen der Übersichtlichkeit jedoch nicht dargestellt sind. Die Fahrschienen 4110, 4110', 4110" bzw. die Fahrschienen 4210, 4210', 4210" sind derart übereinander angeordnet, dass ihre Strukturen 4111, 4111', 4111", 4211, 4211', 4211" paarweise miteinander fluchten. Zwischen je zwei paarweise miteinander fluchtenden Fahrschienen sind Durchgangsöffnungen 4130, 4230, 4130', 4230', 4130", 4230" vorgesehen. Die Durchgangsöffnungen 4130, 4230, 4130', 4230', 4130", 4230" bilden dabei eine Art Unterbrechung zwischen den paarweise fluchtenden Fahrschienen. Außerdem umfassen die oberen Fahrbahnen 2000', 2000", 2000‴ Aussparungen 2100', 2100", 2100‴, die derart dimensioniert sind, dass sich die Lastenbaugruppe 1100B beim Befahren der Schrägfahrmodule 4100, 4100', 4100" in ihrer nicht geneigten Ausrichtung hindurchbewegen kann, ohne dabei mit den oberen Fahrbahnen 2000', 2000", 2000‴ zu kollidieren. Anders als in der in den Figuren 2A, 2B, 3 dargestellten Fahrschienenanordnung 3000 sind bei der Fahrschienenanordnung 4000 zwischen der unteren Fahrbahn 2000 und den Fahrschienen 4110, 4210 des ersten Schrägfahrmoduls 4100 und des zweiten Schrägfahrmoduls 4200 ebenfalls Durchgangsöffnungen 4130, 4230 vorgesehen. Die Raupenschiffe 1200B können somit auch in der ausgefahrenen Position auf der unteren Fahrbahn 2000 durch die Durchgangsöffnungen 4130, 4230 durchfahren.

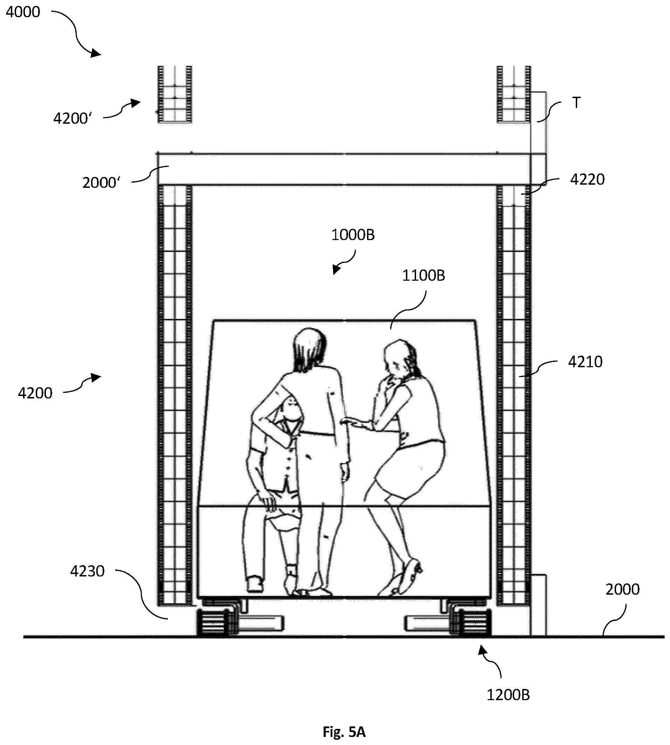

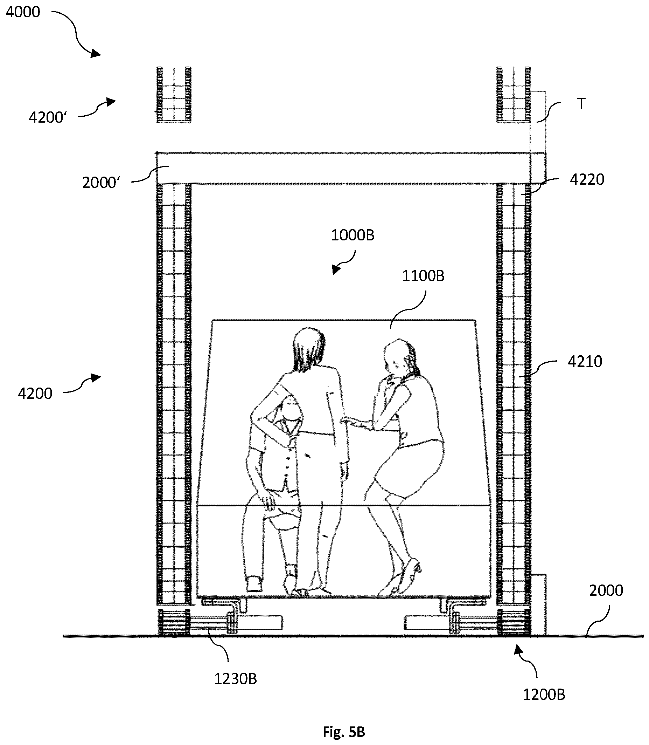

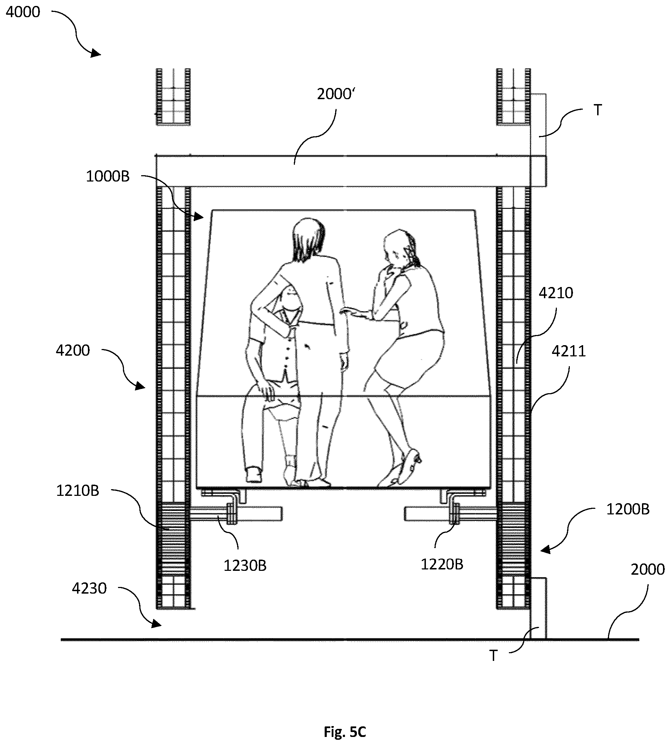

In den Figuren 5A bis 5C sind verschiedene Positionen des Raupenfahrzeugs 1000B beim Start der Schrägfahrt auf der Fahrschienenanordnung 4000 bei einer Betrachtung von hinter dem Raupenfahrzeug 1000B dargestellt. Dabei zeigt Fig. 5A eine schematische Ansicht des erfindungsgemäßen Raupenfahrzeugs 1000B aus Fig. 4 bei Annäherung des Raupenfahrzeugs 1000B an die Fahrschienenanordnung 4000 auf der unteren Fahrbahn 2000 bei einer Betrachtung von hinten. Fig. 5B zeigt eine schematische Ansicht des Raupenfahrzeugs 1000B, ähnlich Fig. 5A, nach dem Verlagern der Raupenschiffe 1200B entlang ihrer Neigungsachsen NA von der eingefahrenen Position in die ausgefahrene Position und Fig. 5C zeigt eine schematische Ansicht des Raupenfahrzeugs 1000B, ähnlich Fig. 5A und Fig. 5B, beim Befahren der Fahrschienenanordnung 4000 zwischen einem Bereich der unteren Fahrbahn 2000 und einem Bereich der oberen Fahrbahn 2000'. Es ist zu beachten, dass in den Figuren 5A bis 5C lediglich ein Teil der Fahrschienenanordnung 4000 dargestellt ist, wobei die nachfolgenden Ausführungen auch für den darüber angeordneten Bereich der Fahrschienenanordnung 4000 gelten.

Beim Einfahren in die Fahrschienenanordnung 4000 passieren die vorderen beiden Raupenschiffe 1200B des Raupenfahrzeugs 1000B, die sich in der Horizontalfahrposition befinden, zunächst eine Durchgangsöffnung 4230 zwischen der unteren Fahrbahn 2000 und den Fahrschienen 4210 des zweiten Schrägfahrmoduls 4200 und nähern sich den Fahrschienen 4110 des ersten Schrägfahrmoduls 4100 an. Dabei wird die Lastenbaugruppe 1100B zwischen den Fahrschienen 4110, 4210 aufgenommen und bleibt in ihrer horizontalen Ausrichtung. Es ist zu beachten, dass sich die Raupenschiffe 1200B beim Passieren der Durchgangsöffnungen 4230 auf der unteren Fahrbahn 2000 sowohl in der eingefahrenen Position als auch in der ausgefahrenen Position befinden können, wobei in Fig. 5A der erstgenannte Fall dargestellt ist. Bevor jedoch die Schrägfahrt des Raupenfahrzeugs 1000B auf der Fahrschienenanordnung 4000 begonnen werden kann, werden die Raupenschiffe 1200B mit Hilfe ihrer Verlagerungsaktuatoren 1230B in die ausgefahrene Position verlagert, was in Fig. 5B dargestellt ist. Zum Auffahren auf die Fahrschienen 4110, 4210 werden die Raupenschiffe 1200B ausgehend von der nicht geneigten Horizontalfahrposition um ihre Neigungsachse NA derart geneigt, dass sie parallel zu den schräg verlaufenden Fahrschienen 4110, 4210 ausgerichtet sind und sich in der Schrägfahrposition befinden. Da das Raupenfahrzeug 1000B gemäß dieser Ausführungsform vier Raupenschiffe 1200B umfasst, können die Raupenschiffe 1200B, auch ohne bereits mit den Fahrschienen 4110, 4210 einzugreifen, mit Hilfe der Neigeaktuatoren 1220B von der Horizontalfahrposition in die Schrägfahrposition geneigt werden, ohne dass sich die Lastenbaugruppe 1100B dabei neigt. In der Schrägfahrposition nähern sich die Raupenschiffe 1200B weiter an die Fahrschienen 4110, 4210 des ersten und zweiten Schrägfahrmoduls 4100, 4200 an, bis die Strukturen 1211B der Antriebsraupen 1210B mit den Strukturen 4111, 4211 der Fahrschienen 4110, 4210 in Kontakt sind und einen formschlüssigen Eingriff herstellen. Die anschließende Bewegung der Antriebsraupen 1210B um die jeweiligen Raupenschiffe 1200B führt zu einer Bewegung der Raupenschiffe 1200B entlang der Fahrschienen 4110, 4210 und somit zu der Schrägfahrt des Raupenfahrzeugs 1000B, was in der Fig. 5C dargestellt ist. Der formschlüssige Eingriff zwischen den Raupenschiffen 1200B und den Schrägfahrmodulen 4100, 4200 ermöglicht eine sichere Fortbewegung des Raupenfahrzeugs 1000B entlang der Fahrschienenanordnung und verhindert ein Abrutschen der Antriebsraupen 1210B an den Fahrschienen 4110, 4210. Wie in den Figuren 5A bis 5C dargestellt ist, kann die Lastenbaugruppe 1100B aufgrund der Distanz zwischen den Fahrschienen 4110, 4110', 4110" der ersten Schrägfahrmodule 4100, 4100', 4100" und den Fahrschienen 4210, 4210', 4210" des zweiter Schrägfahrmodule zwischen den Fahrschienen aufgenommen werden und neigt sich während der gesamten Schrägfahrt nicht. Ein unerwünschtes Verschieben der darin befindlichen Güter oder ein Stürzen der darin befindlichen Personen kann somit auch beim Befahren von Fahrschienenanordnungen mit einer großen Steigung verhindert werden.

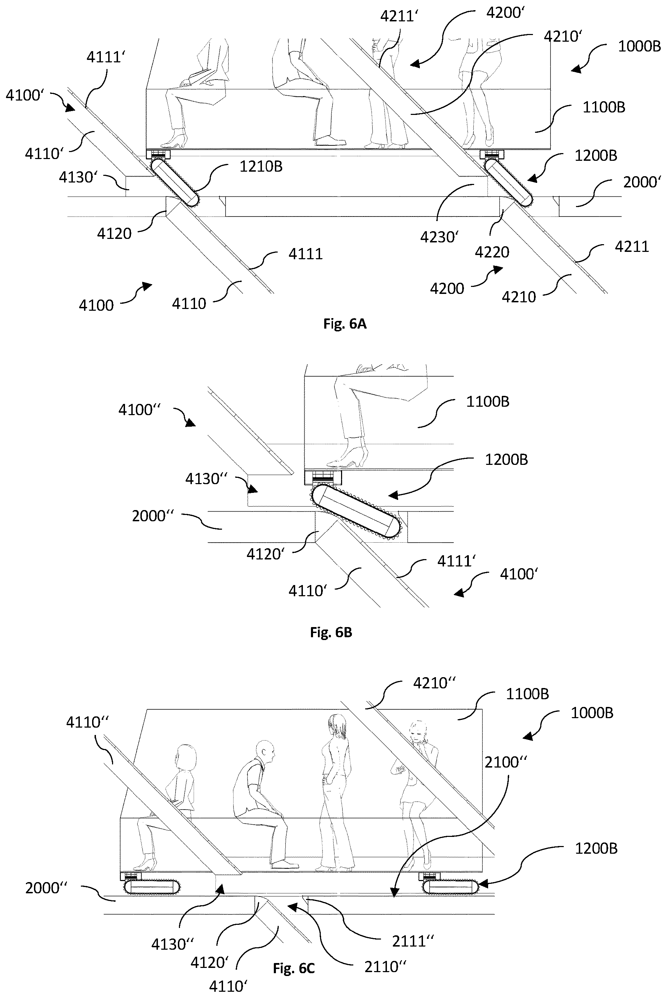

Das Raupenfahrzeug 1000B kann mit Hilfe der Fahrschienenanordnung 4000 zwischen beliebigen Fahrbahnen 2000, 2000', 2000", 2000‴ fahren. Wenn das Raupenfahrzeug 1000B während der Schrägfahrt eine Fahrbahn passieren soll, müssen die Raupenschiffe 1200B Durchgangsöffnungen zwischen je zwei paarweise miteinander fluchtenden Fahrschienen passieren, was exemplarisch in der Fig. 6A dargestellt ist. Fig. 6A zeigt dabei eine schematische Seitenansicht des Raupenfahrzeugs 1000B aus der Fig. 4 beim Überqueren von Durchgangsöffnungen 4130', 4230' zwischen Schrägfahrmodulen 4100, 4200, 4100', 4200' während der Schrägfahrt.

Das Raupenfahrzeug 1000B fährt während der Schrägfahrt entlang der Fahrschienen 4110, 4210, wobei die Strukturen 1211B der Antriebsraupen 1210B mit den Strukturen 4111, 4211 der Fahrschienen 4110, 4210 eingreifen. Beim Erreichen der ersten oberen Fahrbahn 2000' werden die Raupenschiffe 1200B jedoch nicht wieder zurück in die Horizontalfahrposition geneigt und bleiben somit in der Schrägfahrposition, um die Schrägfahrt fortzusetzen. Dementsprechend werden auch die Übergangselemente 4120, 4220 nicht befahren. Stattdessen fährt das Raupenfahrzeug 1000B weiter in der Fahrschienenanordnung 4000 und überquert die Durchgangsöffnungen 4130', 4230' zwischen den Schrägfahrmodulen 4100, 4200 und den Schrägfahrmodulen 4100', 4200'. Wie in der Fig. 6A dargestellt ist, sind die Durchgangsöffnungen 4130', 4230' derart dimensioniert, dass jede Antriebsraupe 1210B beim Überqueren der Durchgangsöffnungen 4130', 4230' zu jeder Zeit mit zumindest einer Fahrschiene 4110, 4210, 4110', 4210' in Kontakt ist. Dadurch kann der formschlüssige Eingriff der Struktur 1211B jeder Antriebsraupe 1210B mit der jeweiligen Struktur 4111, 4111', 4211, 4211' der Fahrschienen 4110, 4110', 4210, 4210' zu jeder Zeit aufrechterhalten werden und eine sichere Schrägfahrt des Raupenfahrzeugs 1000B auch bei der Überquerung von Durchgangsöffnungen 4130', 4230' gewährleistet werden. Nach dem Überqueren der Durchgangsöffnungen 4130', 4230' kann das Raupenfahrzeug anschließend die Schrägfahrt auf den Fahrschienen 4110', 4210' fortsetzen und weiter in Richtung der zu erreichenden Fahrbahn fahren.

Wenn das Raupenfahrzeug 1000B die gewünschte Fahrbahn erreicht hat, fährt es von der Fahrschienenanordnung 4000 auf die Fahrbahn 2000" aus, um anschließend auf der Fahrbahn 2000" fahren zu können, was in den Figuren 6B und 6C dargestellt ist. Fig. 6B zeigt dabei eine schematische seitliche Teilansicht des Raupenfahrzeugs 1000B, ähnlich Fig. 6A, beim Befahren der Übergangselemente 4120' und dem Neigen der Raupenschiffe 1200B um die jeweilige Neigungsachse NA in die Horizontalfahrposition. Fig. 6C zeigt eine schematische Seitenansicht des Raupenfahrzeugs 1000B, ähnlich Fig. 6A und Fig. 6B, beim Ausfahren aus der Fahrschienenanordnung 4000 und dem Befahren der oberen Fahrbahn 2000".

Anders als in der Fig. 6A dargestellt ist, überquert das Raupenfahrzeug 1000B in Fig. 6B und 6C die Durchgangsöffnung 4130" nicht. Stattdessen verlässt es die Fahrschienenanordnung 4000 und fährt auf die zu befahrende Fahrbahn 2000" auf. Beim Erreichen der Fahrbahn 2000" werden die Raupenschiffe 1200B um ihre Neigungsachsen NA von der Schrägfahrposition in die Horizontalfahrposition geneigt. Dabei befahren die Raupenschiffe 1200B die Übergangselemente 4120', 4220', die die Fahrschienen 4110', 4210' mit der Fahrbahn 2000" verbinden. Die Übergangselemente 4120', 4220' weisen hierbei eine bogenartige Gestalt auf und umfassen, ähnlich wie die Fahrschienen 4110', 4210', ebenfalls eine Struktur mit Vorsprüngen und Vertiefungen, die aus Gründen der Übersichtlichkeit jedoch nicht dargestellt ist. Beim Befahren der Übergangselemente 4120', 4220' greift die Struktur 1211B der Antriebsraupen 1210B mit den Strukturen der Übergangselemente 4120', 4220' ein, wodurch ein Abrutschen der Antriebsraupen 1210B auch beim Befahren der Übergangselemente 4120', 4220' verhindert wird und ein sicheres Ausfahren des Raupenfahrzeugs 1000B aus der Fahrschienenanordnung 4000 gewährleistet werden kann.

Unmittelbar nach dem Ausfahren aus der Fahrschienenanordnung 4000 befindet sich das Raupenfahrzeug 1000B in einer Position, wie sie in Fig. 6C dargestellt ist. Die Raupenschiffe befinden sich in der Horizontalfahrposition und in der ausgefahrenen Position und die Lastenbaugruppe 1100B ist zwischen den Fahrschienen 4110", 4210" aufgenommen. Um vollständig aus der Fahrschienenanordnung 4000 auszufahren, muss sich das Raupenfahrzeug 1000B daher auf der Fahrbahn 2000" um eine gewisse Distanz fortbewegen und die hinteren beiden Raupenschiffe 1200B, die in der Fig. 6C rechts dargestellt sind, müssen auf der Fahrbahn 2000" horizontal durch die Durchgangsöffnungen 4130" durchfahren. Es ist zu beachten, dass sich aufgrund der Aussparungen 2100', 2100", 2100‴ die Raupenschiffe 1200B beim Ausfahren aus der Fahrschienenanordnung 4000 auf einer der oberen Fahrbahnen 2000', 2000", 2000‴ in der ausgefahrenen Position befinden müssen, um ein Abstürzen des Raupenfahrzeugs 1000B in die entsprechende Aussparung 2100', 2100", 2100‴ zu verhindern. Ebenfalls müssen die Raupenschiffe 1200B einen Bereich 2110" der Aussparung 2100" überqueren, der sich benachbart zu den Übergangselementen 4120' befindet. Um zu verhindern, dass die hinteren beiden Raupenschiffe 1200B bei dieser Überquerung ungewollt von der Fahrbahn 2000" abstürzen, sind Vorsprünge 2111" an der Fahrbahn 2000" vorgesehen, die die Breite des Bereichs 2110" der Aussparung 2100" in horizontaler Richtung verkleinern. Die Vorsprünge 2111" gewährleisten dadurch, dass die Antriebsraupen 1210B beim Überqueren des Bereichs 2110" der Aussparung 2100" zu jeder Zeit mit der Fahrbahn 2000" in Kontakt sind und ermöglichen somit, dass das Raupenfahrzeug 1000B vollständig aus der Fahrschienenanordnung 4000 ausfahren kann.

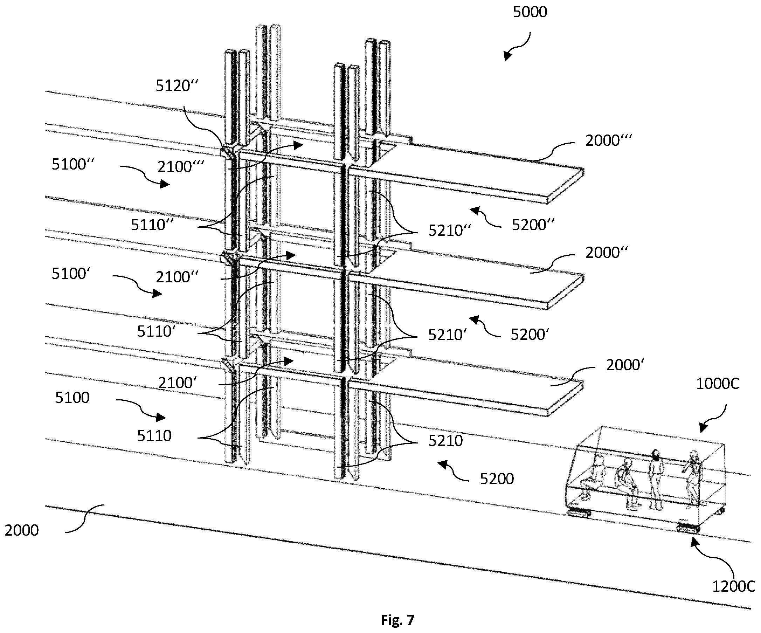

Vorstehend wurde der Fall betrachtet, dass die Fahrbahnen 2000, 2000', 2000", 2000‴ mit Schrägfahrmodulen 4100, 4200, 4100', 4200', 4100", 4200" verbunden werden. Eine weitere erfindungsgemäße Ausführungsform einer Fahrschienenanordnung 5000 ist in der Fig. 7 dargestellt. Fig. 7 zeigt dabei eine schematische perspektivische Ansicht eines erfindungsgemäßen Raupenfahrzeugs 1000C mit vier Raupenschiffen 1200C und der erfindungsgemäßen Fahrschienenanordnung 5000, die mehrere Fahrbahnen 2000, 2000', 2000", 2000‴ mit Vertikalfahrmodulen 5100, 5100', 5100" miteinander verbindet. Das Raupenfahrzeug 1000C ähnelt dabei dem Raupenfahrzeug 1000B, weist aber zusätzlich Klemmmittel auf, die im Folgenden im Detail beschrieben werden. Auf eine detaillierte Beschreibung von ähnlichen Elementen des Raupenfahrzeugs 1000C wird im Folgenden verzichtet.

Jedes Vertikalfahrmodul 5100, 5100', 5100" umfasst dabei ein erstes Paar von Fahrschienen 5110, 5110', 5110" und ein zweites Paar von Fahrschienen 5210, 5210' 5210", die parallel zueinander angeordnet sind. Das erste Paar von Fahrschienen 5110, 5110', 5110" und das zweite Paar von Fahrschienen 5210, 5210' 5210" sind an einer umgebenden Tragstruktur T befestigt und verlaufen vertikal zwischen den Fahrbahnen 2000, 2000', 2000", 2000"'. Beispiele für die umgebende Tragstruktur T können dabei ein Gebäude oder ein Lagersystem sein. Die oberen Fahrbahnen 2000', 2000", 2000‴ umfassen Aussparungen 2100', 2100", 2100‴, die derart dimensioniert sind, dass sich das Raupenfahrzeug 1000C beim Befahren der Vertikalfahrmodule 5100, 5100', 5100" hindurchbewegen kann, ohne dabei mit den oberen Fahrbahnen 2000', 2000", 2000‴ zu kollidieren. Ähnlich zu der in Fig. 4 dargestellten Ausführungsform der Fahrschienenanordnung 4000 sind die Fahrschienen des ersten Paars von Fahrschienen 5110, 5110', 5110" und die Fahrschienen des zweiten Paars von Fahrschienen 5210, 5210', 5210" horizontal um eine Distanz voneinander beabstandet, die der Distanz der Raupenschiffe 1200C in der ausgefahrenen Position in der Fahrzeugbreitenrichtung entspricht. Das erste Paar von Fahrschienen 5110, 5110', 5110" ist zudem von dem zweiten Paar von Fahrschienen 5210, 5210', 5210" um eine Distanz beabstandet, die der Distanz der Neigungsachsen NA der Raupenschiffe 1200C in der Geradeausfahrposition in der Fahrzeuglängsrichtung entspricht. In anderen Worten ist zum Befahren der Fahrschienenanordnung 5000 jedem Raupenschiff 1200C des Raupenfahrzeugs 1000C eine Fahrschiene zugeordnet. Jede Fahrschiene umfasst an einer Oberfläche eine Struktur 5111, 5211, 5111', 5211', 5111" 5211" mit Vorsprüngen und Vertiefungen. Benachbart zu oberen Endbereichen der Fahrschienen 5110, 5110', 5110" sind Übergangselemente 5120, 5120', 5120" vorgesehen, die ebenfalls Strukturen mit Vorsprüngen und Vertiefungen aufweisen, die aus Gründen der Übersichtlichkeit jedoch nicht dargestellt sind. Anders als in der in Fig. 4 dargestellten Fahrschienenanordnung 4000 sind die Übergangselemente 5120, 5120', 5120" jedoch nicht integral mit den Fahrschienen 5110, 5110', 5110" gebildet. Stattdessen sind die Übergangselemente 5120, 5120', 5120" an der jeweiligen Fahrbahn 2000', 2000", 2000‴ derart positioniert, dass ihre Strukturen den Strukturen 5111, 5111', 5111" der Fahrschienen 5110, 5110', 5110" gegenüberliegen. Zwischen den übereinander angeordneten Vertikalfahrmodulen 5100, 5200, 5100', 5200', 5100", 5200" sind außerdem Durchgangsöffnungen 5130', 5130", 5130‴ vorgesehen. Ebenfalls sind Durchgangsöffnungen 5130, 5230 zwischen der unteren Fahrbahn 2000 und dem ersten Paar von Fahrschienen 5110 bzw. dem zweiten Paar von Fahrschienen 5210 vorgesehen.

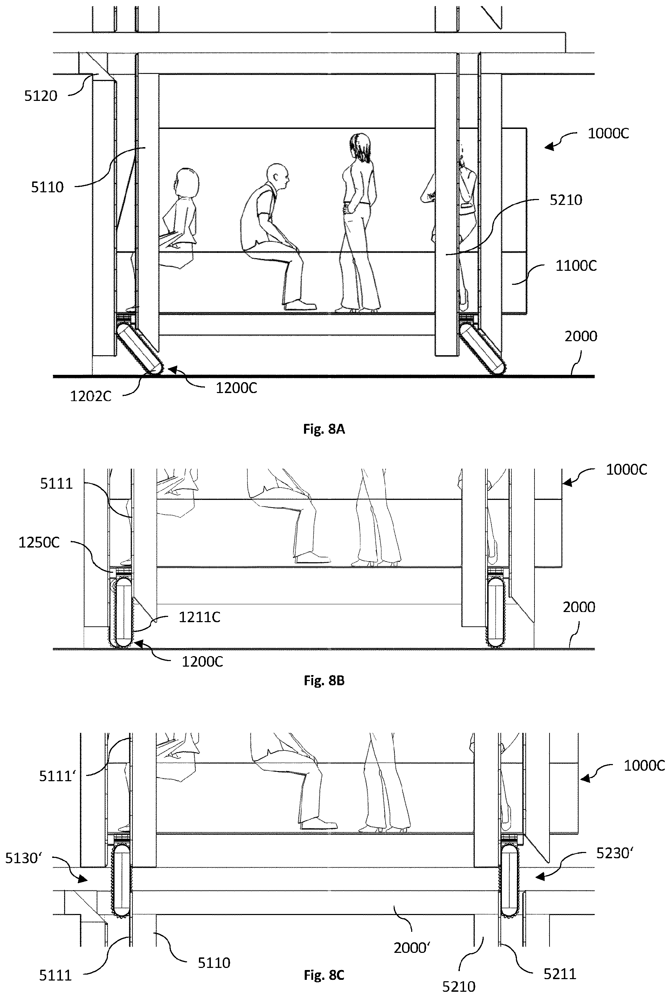

Die in dieser Ausführungsform dargestellte Fahrschienenanordnung 5000 ist insbesondere dazu ausgelegt, von dem Raupenfahrzeug 1000C mit vier Raupenschiffen 1200C befahren zu werden. Als nächstes werden anhand der Figuren 8A bis 8F verschiedene Positionen und Bewegungsabläufe des Raupenfahrzeugs 1000C während des Befahrens der Fahrschienenanordnung 5000 beschrieben. Wie in der Fig. 7 in einem rechten unteren Bereich dargestellt ist, fährt das Raupenfahrzeug 1000C zunächst auf der unteren Fahrbahn 2000 und nähert sich der Fahrschienenanordnung 5000 an, wobei sich die Raupenschiffe 1200C in der Horizontalfahrposition befinden. Das Raupenfahrzeug 1000C fährt zwischen den Paaren von Fahrschienen 5110, 5120 in die Fahrschienenanordnung 5000 ein und verlagert die Raupenschiffe 1200C von der eingefahrenen Position in die ausgefahrene Position. Die Lastenbaugruppe 1100C befindet sich in dieser Position zwischen den Fahrschienen 5110, 5210 und die Raupenschiffe 1200C sind derart positioniert, dass sie sich jeweils unterhalb der ihnen zugeordneten Fahrschienen 5110, 5120 befinden.

In dieser Position werden die Raupenschiffe 1200C um ihre Neigungsachsen NA geneigt. Fig. 8A zeigt dabei eine schematische Seitenansicht des Raupenfahrzeugs 1000C aus Fig. 7 beim Neigen der Raupenschiffe 1200C um die jeweilige Neigungsachse NA von der Horizontalfahrposition in eine Vertikalfahrposition. In der Vertikalfahrposition sind die Raupenschiffe 1200C relativ zu der Horizontalfahrposition um 90° um ihre Neigungsachsen NA geneigt und stehen jeweils an einem hinteren Endbereich 1202C auf der unteren Fahrbahn 2000 auf. Bereits bei der Neigung der Raupenschiffe 1200C in die Vertikalfahrposition hebt sich die gesamte Lastenbaugruppe 1100C an, ohne sich dabei ungewollt zu neigen. Die Raupenschiffe 1200C sind dabei parallel zu den Fahrschienen 5110, 5210 ausgerichtet und die Fahrschienen 5110, 5210 befinden sich zwischen den hintereinander in Längsrichtung des Raupenfahrzeugs 1000C angeordneten Raupenschiffen 1200C.

Damit das Raupenfahrzeug 1000C jedoch vertikal entlang der Fahrschienenanordnung 5000 fahren kann, muss ein Eingriff zwischen den Raupenschiffen 1200C und den Fahrschienen 5110, 5210 hergestellt werden, was in der Fig. 8B dargestellt ist. Fig. 8B zeigt dabei eine schematische Seitenansicht des Raupenfahrzeugs 1000C, ähnlich Fig. 8A, beim Eingreifen der Antriebsraupen 1210C der Raupenschiffe 1200C mit der Struktur 5111, 5211 der jeweiligen Fahrschienen 5110, 5210. Dabei werden die Raupenschiffe 1200C in der Vertikalfahrposition entlang ihrer Klemmachsen KA in Richtung der Fahrschienen 5110, 5210 verlagert, wodurch ein formschlüssiger und kraftschlüssiger Eingriff zwischen der Struktur 1211C der Antriebsraupen 1210C und den Strukturen 5111, 5211 der Fahrschienen 5110, 5210 hergestellt wird. Wie in der Fig. 8B dargestellt ist, ist es ausreichend, wenn beispielsweise die vorderen zwei Raupenschiffe 1200C (in der Fig. 8B links dargestellt), mit Hilfe der Klemmaktuatoren 1250C in Richtung der Fahrschienen 5110 verlagert werden, da dadurch auch die hinteren beiden Raupenschiffe 1200C gegen die Fahrschienen 5210 verlagert werden. Aufgrund der Verlagerung der Raupenschiffe 1200C entsteht zwischen den Raupenschiffen 1200C und den Fahrschienen 5110, 5210 einerseits eine Klemmkraft und andererseits ein formschlüssiger Eingriff zwischen der Struktur 1211C der jeweiligen Antriebsraupen 1210C und den Strukturen 5111, 5211 der Fahrschienen 5110, 5210. Ausgehend von dieser Position kann eine sichere Vertikalfahrt entlang der Fahrschienenanordnung 5000 gestartet werden und die Lastenbaugruppe 1100C kann sicher in einer nicht geneigten Ausrichtung vertikal zwischen den Fahrbahnen 2000, 2000', 2000", 2000‴ bewegt werden, wobei ein Abrutschen der Antriebsraupen 1210C an den Fahrschienen 5110, 5210 verhindert werden kann.

Damit das Raupenfahrzeug 1000C beispielsweise von der unteren Fahrbahn 2000 zu der zweiten oberen Fahrbahn 2000" fahren kann, muss es während der Vertikalfahrt die erste obere Fahrbahn 2000' überqueren, was in der Fig. 8C dargestellt ist. Dabei zeigt Fig. 8C eine schematische Seitenansicht des Raupenfahrzeugs, ähnlich Fig. 8B, beim Überqueren von Durchgangsöffnungen 5130', 5230' zwischen zwei übereinander angeordneten Vertikalfahrmodulen 5100, 5100' während der Vertikalfahrt. Wie vorstehend beschrieben wurde, fährt das Raupenfahrzeug 1000C während der Vertikalfahrt entlang der Fahrschienen 5110, 5210, wobei die Strukturen 1211C der Antriebsraupen 1210C mit den Strukturen 5111, 5211 der Fahrschienen 5110, 5210 eingreifen. Beim Erreichen der ersten oberen Fahrbahn 2000' beendet das Raupenfahrzeug 1000C jedoch nicht die Vertikalfahrt, sondern überquert die Durchgangsöffnungen 5130', 5230' zwischen den Vertikalfahrmodulen 5100, 5100' und den Vertikalfahrmodulen 5200, 5200'. Wie in der Fig. 8C dargestellt ist, sind die Durchgangsöffnungen 5130', 5230' derart dimensioniert, dass jede Antriebsraupe 1210C beim Überqueren der Durchgangsöffnungen 5130', 5230' zu jeder Zeit mit zumindest einer Fahrschiene 5110, 5210, 5110', 5210' in Kontakt ist. Dadurch kann die Klemmkraft und somit auch der Eingriff zwischen der Struktur 1211C jeder Antriebsraupe 1210C und der jeweiligen Struktur 5111, 5211, 5111', 5211' der jeweiligen Fahrschienen 5110, 5210, 5110', 5210' zu jeder Zeit aufrechterhalten werden. Nach dem Überqueren der Durchgangsöffnungen 5130', 5230' kann das Raupenfahrzeug 1000C anschließend die Vertikalfahrt entlang der Fahrschienen 5110', 5210' fortsetzen und weiter in Richtung der zu erreichenden Fahrbahn fahren.

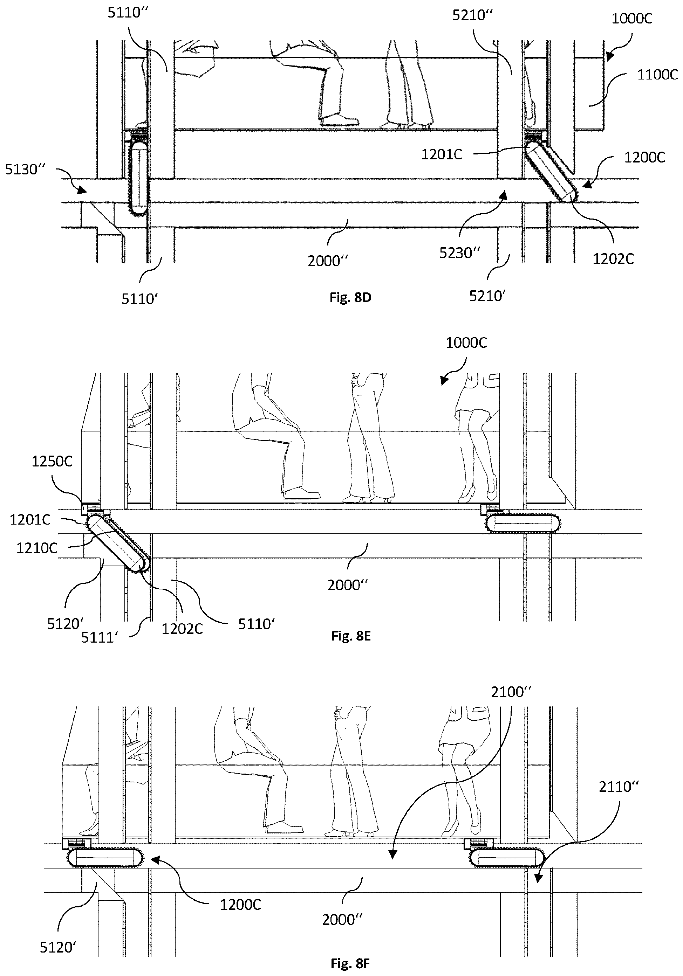

Wenn das Raupenfahrzeug 1000C die zu erreichende Fahrbahn 2000" erreicht hat, wird die Vertikalfahrt entlang der Fahrschienenanordnung 5000 beendet und die Fahrt auf der Fahrbahn 2000" begonnen, was in den Figuren 8D bis 8F dargestellt ist. Fig. 8D zeigt dabei eine schematische Seitenansicht des Raupenfahrzeugs 1000C, ähnlich Fig. 8C, beim Neigen von zwei in Fahrzeugbreitenrichtung nebeneinander angeordneten Raupenschiffen 1200C um die jeweilige Neigungsachse NA von einer Vertikalfahrposition in eine Horizontalfahrposition.

Um das Ausfahren aus der Fahrschienenanordnung 5000 auf die obere Fahrbahn 2000" zu beginnen, überquert das Raupenfahrzeug 1000C zunächst die Durchgangsöffnungen 5130", 5230" bis sich die hinteren Endbereiche 1202C der Raupenschiffe 1200C auf der Höhe der oberen Fahrbahn 2000" befinden. In dieser Position fährt das Raupenfahrzeug 1000C nicht mehr weiter nach oben und die Raupenschiffe 1200C sind in Eingriff mit den Fahrschienen 5110", 5210". Anschließend werden die hinteren beiden Raupenschiffe 1200C, die in Fig. 8D rechts dargestellt sind, um ihre Neigungsachsen NA von der Vertikalfahrposition in die Horizontalfahrposition geneigt während sich das Raupenfahrzeug 1000C wieder nach unten in Richtung der oberen Fahrbahn 2000" bewegt. Zunächst kommen dabei die hinteren Endbereiche 1202C der hinteren beiden Raupenschiffe 1200C in Kontakt mit der oberen Fahrbahn 2000", während der Kontakt mit der Fahrschiene 5210" aufrechterhalten bleibt, wie dies in der Fig. 8D dargestellt ist. Beim weiteren Neigen der hinteren Raupenschiffe 1200C in die Horizontalfahrposition wird der Kontakt an dem vorderen Endbereich 1201C mit den Fahrschienen 5210" jedoch aufgelöst und die hinteren Raupenschiffe 1200C sind lediglich noch mit der oberen Fahrbahn 2000' in Kontakt. Während des Neigens der hinteren Raupenschiffe 1200C wird an den vorderen Raupenschiffen 1200C, die in der Fig. 8D links dargestellt sind, die Klemmkraft und der Eingriff mit den Fahrschienen 5110', 5110" aufrechterhalten. Dadurch kann gewährleistet werden, dass die Raupenschiffe 1200C des Raupenfahrzeugs 1000C zu jedem Zeitpunkt mit einer Fahrschiene 5110', 5110", 5210" oder der oberen Fahrbahn 2000" in Kontakt sind und es kann verhindert werden, dass das Raupenfahrzeug 1000C bei diesem Teilschritt des Verlassens der Fahrschienenanordnung 5000 abstürzt.

Anschließend befahren die vorderen beiden Raupenschiffe 1200C die Übergangselemente 5120', wie in Fig. 8E dargestellt ist. Dabei zeigt Fig. 8E eine schematische Seitenansicht des Raupenfahrzeugs 1000C, ähnlich Fig. 8D, beim Verlagern von zumindest einem Raupenschiff 1200C mittels seines Klemmaktuators 1250C entlang der Klemmachse KA zwischen der Struktur 5111' der jeweiligen Fahrschiene 5110' und der Struktur des jeweiligen Übergangselements 5120'. Die Übergangselemente 5120' sind schräg an der oberen Fahrbahn 2000" und benachbart zu den oberen Endbereichen der Fahrschienen 5110' angeordnet, wobei die Strukturen der Übergangselemente 5120' den Strukturen 5111' der entsprechenden Fahrschienen 5110' gegenüberliegen. Zum Befahren der Übergangselemente 5120' werden die vorderen Raupenschiffe 1200C um ihre Neigungsachsen NA derart geneigt, dass sie parallel zu den schräg angeordneten Übergangselementen 5120' ausgerichtet sind. Wie in der Fig. 8E dargestellt ist, wird das Raupenfahrzeug dabei horizontal nach links bewegt. Dabei wird zunächst der Kontakt und somit die Klemmkraft zwischen den hinteren Endbereichen 1202C der vorderen Raupenschiffe 1200C und den Strukturen 5111' der Fahrschienen 5110' aufrechterhalten. Anschließend wird ein einzelnes der vorderen beiden Raupenschiffe 1200C entlang seiner Klemmachse KA derart verlagert, dass der Kontakt mit der entsprechenden Fahrschiene 5110' aufgelöst wird und das Raupenschiff 1200C in Kontakt mit dem gegenüberliegenden Übergangselement 5120' kommt. Währenddessen bleibt jedoch der Kontakt zwischen dem anderen vorderen Raupenschiff 1200C und der Fahrschiene 5110', sowie der Kontakt zwischen den hinteren beiden Raupenschiffen 1200C und der Fahrbahn 2000" erhalten. Dieser Vorgang wird für das andere vordere Raupenschiff 1200C wiederholt, während die anderen drei Raupenschiffe 1200C in Kontakt mit entweder dem Übergangselement 5120' oder der oberen Fahrbahn 2000" sind.

In dieser Konfiguration greifen die vorderen beiden Raupenschiffe 1200C mit den Übergangselementen 5120' ein, während sich die hinteren beiden Raupenschiffe 1200C bereits auf der oberen Fahrbahn 2000" befinden. Es ist zu beachten, dass zur weiteren Fahrt des Raupenfahrzeugs 1000C nach der Umsetzung der Raupenschiffe 1200C zwischen den Fahrschienen 5110' und den Übergangselementen 5120' die Drehrichtung der Antriebsraupen 1210C umgekehrt werden muss, um ein Verkeilen der Antriebsraupen 1210C zu vermeiden. Wie in der Fig. 8E rechts dargestellt ist, überqueren die hinteren Raupenschiffe 1200C Bereiche 2110" der Aussparung 2100", die sich benachbart zu einem oberen Endbereich des zweiten Paars von Fahrschienen 5210' befinden. Die Bereiche 2110" sind derart dimensioniert, dass sie die Raupenschiffe 1200C in der ausgefahrenen Position beim Ausfahren aus der Fahrschienenanordnung 5000 überqueren können, ohne dass das Raupenfahrzeug 1000C dadurch von der Fahrbahn 2000" abstürzt.

Um vollständig aus der Fahrschienenanordnung 5000 auszufahren, werden die vorderen beiden Raupenschiffe 1200C um ihre Neigungsachsen NA in die Horizontalfahrposition geneigt, was in Fig. 8F dargestellt ist. Dabei zeigt Fig. 8F eine schematische Seitenansicht des Raupenfahrzeugs 1000C, ähnlich Fig. 8E, beim Ausfahren aus der Fahrschienenanordnung 5000 und dem Befahren der oberen Fahrbahn 2000". Somit sind in der in Fig. 8F dargestellten Situation alle Raupenschiffe 1200C des Raupenfahrzeugs 1000C wieder in der Horizontalfahrposition auf der oberen Fahrbahn 2000". Das Raupenfahrzeug 1000C kann somit die Horizontalfahrt auf der oberen Fahrbahn 2000" starten.

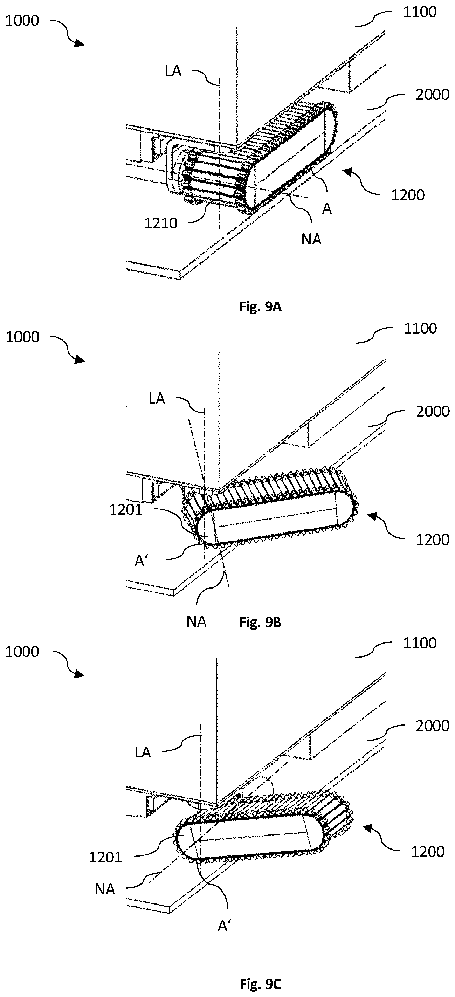

In den vorstehenden Ausführungsformen wurden die erfindungsgemäßen Fahrschienenanordnungen 3000, 4000, 5000 und das Befahren davon mit den erfindungsgemäßen Raupenfahrzeugen 1000A, 1000B, 1000C im Detail beschrieben. Nachfolgend werden weitere Bewegungsfreiheitsgrade des erfindungsgemäßen Raupenfahrzeugs 1000 auf der Fahrbahn 2000 anhand der Figuren 9A bis 9C beschrieben. Fig. 9A zeigt eine schematische perspektivische Ansicht eines Raupenschiffs 1200 in der eingefahrenen Position und in der nicht geneigten Position entsprechend Fig. 1A. In dieser Position kann die Antriebsraupe 1210 des Raupenschiffs 1200 angetrieben werden und das Raupenfahrzeug fortbewegen. Zur Änderung der Fahrtrichtung des Raupenfahrzeugs 1000 können die Antriebsraupen 1210 der Raupenschiffe 1200 einerseits mit verschiedenen Drehrichtungen und/oder Drehgeschwindigkeiten angetrieben werden, ähnlich wie zum Beispiel bei einer Pistenraupe.

Andererseits können auch die gesamten Raupenschiffe 1200 um ihre Lenkachsen LA gedreht werden, wie in Fig. 9B dargestellt ist. Fig. 9B zeigt dabei eine schematische perspektivische Ansicht des Raupenschiffs 1200 aus Fig. 9A während einer kombinierten Drehung um seine Lenkachse LA und Neigung um seine Neigungsachse NA. Die Drehung des Raupenschiffs 1200 um die Lenkachse LA führt zu einer Änderung des Spurwinkels des Raupenschiffs 1200. Die Neigung des Raupenschiffs 1200 um seine Neigungsachse NA führt zudem zu einer Verschiebung der Aufstandsoberfläche A', die aufgrund der länglichen Gestalt des Raupenschiffs 1200 kleiner ist, als die Aufstandsoberfläche A in der nicht geneigten Position. In der Fig. 9B wird das Raupenschiff 1200 dabei derart geneigt, dass sich die Aufstandsoberfläche A' hin zu dem vorderen Endbereich 1201 des Raupenschiffs 1200 verschiebt, in dem die Neigungsachse NA und die Lenkachse LA das Raupenschiff 1200 durchstoßen. Somit wird in dieser Position die Aufstandsoberfläche A' ebenfalls von der Lenkachse LA durchstoßen. Bei der Drehung des Raupenschiffs 1200 um die Lenkachse LA kann dadurch verhindert werden, dass sich das gesamte Raupenfahrzeug 1000 kreiselartig bewegt.

Das Raupenschiff 1200 kann um einen beliebigen Winkel, wie z.B. um 90° um die Lenkachse LA gedreht werden. Fig. 9C zeigt eine schematische perspektivische Ansicht des Raupenschiffs aus Fig. 9A nach der kombinierten Drehung um seine Lenkachse LA und Neigung um seine Neigungsachse NA in einer Querfahrposition. In der Querfahrposition sind die Raupenschiffe 1200 des Raupenfahrzeugs um im Wesentlichen 90° um ihre Lenkachsen gedreht. Außerdem ist das Raupenschiff 1200 derart geneigt, dass sich die Aufstandsoberfläche A' an dem vorderen Endbereich 1201 des Raupenschiffs 1200 befindet und von der Lenkachse LA durchstoßen wird. Werden alle Raupenschiffe 1200 des Raupenfahrzeugs 1000 in eine solche Position bewegt, fährt das Raupenfahrzeug 1000 quer zu der in Fig. 9A dargestellten Fahrtrichtung.

Das Raupenfahrzeug 1000 kann somit innerhalb einer Fahrbahn 2000 seine Fahrtrichtung durch eine Drehung des Raupenschiffs 1200 um die Lenkachse LA, vorzugsweise mit einer kombinierten Neigung um die Neigungsachse NA, ändern. Somit wird beispielsweise eine Querfahrt des Raupenfahrzeugs 1000 ermöglicht, wobei die Fahrtrichtung während der Querfahrt um 90° relativ zu der in Fig. 9A dargestellten Fahrtrichtung gedreht ist. Da sich die Lastenbaugruppe 1100 bei der Drehung der Raupenschiffe 1200 um die Lenkachse LA nicht bewegt, wird für die Richtungsänderung des Raupenfahrzeugs 1000 wenig Platz benötigt und die Agilität des Raupenfahrzeugs wird auch auf Fahrbahnen mit wenig verfügbarem Platz sichergestellt.

In der vorstehenden Beschreibung bevorzugter Ausführungsformen wurde der Fall betrachtet, dass das Raupenfahrzeug 1000, 1000A, 1000B, 1000C Raupenschiffe 1200, 1200A, 1200B, 1200C umfasst, die eine längliche Gestalt mit abgerundeten Endbereichen aufweisen. Die Raupenschiffe können jedoch auch andere Gestaltungen aufweisen und zum Beispiel eine im Wesentlichen quadratische, trapezförmige oder ovale Form aufweisen.

Vorstehend wurde davon ausgegangen, dass die Antriebsraupen 1210, 1210A, 1210B, 1210C mit einer Vielzahl umlaufender Kettenglieder gebildet werden. Denkbar ist jedoch auch, dass es sich bei den Antriebsraupen um umlaufende und einstückige Riemen handelt, die an ihrer äußeren Oberfläche eine Struktur mit Vorsprüngen und Vertiefungen aufweisen.

In der obigen Beschreibung der Vertikalfahrt anhand der Fig. 8B wurde der Fall betrachtet, in dem die Raupenschiffe zum Erzeugen der Klemmkraft gegeneinander, also in Richtung des Zentrums des Raupenfahrzeugs, verlagert wurden und sich die Fahrschienen bei der Vertikalfahrt in Fahrzeuglängsrichtung zwischen den Raupenschiffen befanden. Es ist jedoch auch möglich, dass sich die Raupenschiffe bei der Vertikalfahrt in Fahrzeuglängsrichtung zwischen den Fahrschienen befinden und die Raupenschiffe weg voneinander verlagert werden, um eine Spannkraft zwischen den Fahrschienen und den Raupenschiffen zu erzeugen. Die Spannkraft tritt dann an die Stelle der Klemmkraft und gewährleistet einen Eingriff zwischen den Strukturen der Antriebsraupen und den Strukturen der Fahrschienen. In dieser Konfiguration findet beim Erreichen der zu befahrenden Fahrbahn keine Verlagerung der vorderen Raupenschiffe entlang ihrer Klemmachsen zwischen den Fahrschienen und den Übergangselementen statt und somit auch keine Umkehrung der Drehrichtung der vorderen Antriebsraupen, die in den Figuren 8A bis 8F links dargestellt sind. Vielmehr erfolgt die Umsetzung und auch die Umkehrung der Drehrichtung an den hinteren Antriebsraupen, die in den Figuren 8A bis 8F rechts dargestellt sind.

Ebenfalls wurde in der vorstehenden Beschreibung der Vertikalfahrt anhand der Figuren 8A bis 8F der Fall beschrieben, in dem die Übergangselemente benachbart zu oberen Endbereichen des ersten Paars von Fahrschienen bzw. den vorderen beiden Fahrschienen vorgesehen sind. Es ist jedoch auch möglich, dass die Übergangselemente benachbart zu den oberen Endbereichen des zweiten Paars von Fahrschienen, also den hinteren beiden Fahrschienen, vorgesehen sind.

In den vorstehend beschriebenen Ausführungsformen der Schräg- und Vertikalfahrt war der Eingriff zwischen den Antriebsraupen und den Fahrschienen grundsätzlich formschlüssig und in dem Fall der Vertikalfahrt zusätzlich kraftschlüssig. Gemäß der vorliegenden Erfindung ist es jedoch auch möglich, dass der Eingriff zwischen den Antriebsraupen und den Fahrschienen lediglich kraftschlüssiger Natur ist, wie dies zum Beispiel bei der DE20 2020 100 256 U1 der Fall ist. Dabei besteht zwischen den Antriebsraupen, insbesondere dem Linearmotor, und den Fahrschienen eine magnetische Anziehungskraft.

Es ist zu beachten, dass das erfindungsgemäße Raupenfahrzeug neben den vorstehend beschriebenen Elementen eine oder mehrere elektronische Steuereinheiten umfassen kann, die insbesondere zur Steuerung der Antriebsraupen, der Neigemittel, der Verlagerungsmittel, der Lenkmittel sowie der Klemmmittel ausgelegt ist/sind. Die elektronische Steuerungseinheit kann sowohl physisch an dem Raupenfahrzeug vorgesehen sein, als auch über eine drahtlose Verbindung mit dem Raupenfahrzeug verbunden sein und das Raupenfahrzeug somit von der Ferne aus steuern.

## Patentansprüche

1. Raupenfahrzeug (1000A,B,C), umfassend:
eine Lastenbaugruppe (1100A,B,C);
zumindest zwei Antriebsraupen (1210A,B,C), die an der Lastenbaugruppe (1100A,B,C) zur Ausführung einer Bewegung längs einer Umlaufbahn der jeweiligen Antriebsraupe (1210A,B,C) für eine Fahrt des Raupenfahrzeugs (1000A,B,C) entlang einer Fahrtrichtung beweglich gelagert sind;
**dadurch gekennzeichnet, dass** jede Antriebsraupe (1210A,B,C) an einem jeweiligen Raupenschiff (1200A,B,C) ausgebildet ist und das Raupenfahrzeug (1000A,B,C) ferner umfasst:
Neigemittel (1220A,B,C) zum Neigen der Raupenschiffe (1200A,B,C) um eine jeweilige Neigungsachse (NA), die sich im Wesentlichen senkrecht zu der Bewegungsrichtung der jeweiligen Antriebsraupe (1210A,B,C) erstreckt; und
Verlagerungsmittel (1230A,B,C) zum Verlagern der Raupenschiffe (1200A,B,C) entlang der jeweiligen Neigungsachse (NA) zwischen einer eingefahrenen Position und einer ausgefahrenen Position,
wobei die Raupenschiffe (1200A,B,C) in der eingefahrenen Position unterhalb eines Unterbodens (1110A,B,C) der Lastenbaugruppe (1100A,B,C) angeordnet sind, und
wobei die Raupenschiffe (1200A,B,C) in der ausgefahrenen Position in der Fahrzeugbreitenrichtung an gegenüberliegenden Seiten über die Lastenbaugruppe (1100A,B,C) hinausragen.

2. Raupenfahrzeug (1000A,B,C) nach Anspruch 1, wobei das Raupenfahrzeug (1000A,B,C) ferner Lenkmittel (1240A,B,C) zum Ändern der Fahrtrichtung des Raupenfahrzeugs (1000A,B,C) umfasst.

3. Raupenfahrzeug (1000A,B,C) nach Anspruch 2, wobei die Lenkmittel (1240A,B,C) dazu ausgelegt sind, die Fahrtrichtung des Raupenfahrzeugs (1000A,B,C) durch unterschiedliche Drehgeschwindigkeiten und/oder Drehrichtungen der Antriebsraupen (1210A,B,C) zu ändern.

4. Raupenfahrzeug (1000A,B,C) nach Anspruch 2 oder 3, wobei die Lenkmittel (1240A,B,C) dazu ausgelegt sind, die Fahrtrichtung des Raupenfahrzeugs (1000A,B,C) durch Drehung der Raupenschiffe (1200A,B,C) um jeweils zugeordnete Lenkachsen (LA) zu ändern.

5. Raupenfahrzeug (1000A,B,C) nach Anspruch 4, wobei die Raupenschiffe (1200A,B,C) in der eingefahrenen Position von ihrer jeweiligen Lenkachse (LA) in einem vorderen Endbereich (1201A,B,C) oder in einem hinteren Endbereich (1202A,B,C) durchstoßen werden.

6. Raupenfahrzeug (1000A,B,C) nach einem der vorhergehenden Ansprüche, wobei die Raupenschiffe (1200A,B,C) von ihrer jeweiligen Neigungsachse (NA) in einem vorderen Endbereich (1201A,B,C) oder in einem hinteren Endbereich (1202A,B,C) durchstoßen werden.

7. Raupenfahrzeug (1000A,B,C) nach einem der Ansprüche 4 bis 6, wobei die jeweilige Lenkachse (LA) jedes Raupenschiffs (1200A,B,C) seine jeweilige Neigungsachse (NA) schneidet.

8. Raupenfahrzeug (1000A,B,C) nach einem der vorherigen Ansprüche, wobei das Raupenfahrzeug (1000A,B,C) ferner umfasst:
Klemmmittel (1250C) zum Verlagern von zumindest zwei Raupenschiffen (1200A,B,C), die in der Fahrzeugbreitenrichtung nebeneinander angeordnet sind, entlang jeweiliger Klemmachsen (KA), die sich im Wesentlichen in einer Fahrzeuglängsrichtung erstrecken.

9. Fahrschienenanordnung (3000, 4000, 5000), umfassend:
zumindest zwei Fahrschienen (3110), die im Wesentlichen parallel zueinander angeordnet sind,
wobei jede der Fahrschienen (3110) eine Struktur (3111) mit Vorsprüngen und Vertiefungen aufweist, die dazu ausgelegt ist, in formschlüssigem und/oder kraftschlüssigem Eingriff mit Antriebsraupen (1210A) eines Raupenfahrzeugs (1000A) nach einem der Ansprüche 1 bis 8 zu sein,
wobei die Fahrschienenanordnung ferner umfasst:
zumindest ein Schrägfahrmodul (3100), wobei das Schrägfahrmodul (3100) umfasst:
die zumindest zwei Fahrschienen (3110), die dazu ausgelegt sind, an einer umgebenden Tragstruktur (T) derart befestigt zu sein, dass sie parallel zueinander und schräg von einer unteren Fahrbahn (2000) zu einer ersten oberen Fahrbahn (2000') verlaufen, wobei sich die erste obere Fahrbahn (2000') in einer vorbestimmten Höhe relativ zu der unteren Fahrbahn (2000) befindet, und wobei die zwei Fahrschienen (3110) horizontal voneinander um eine Distanz beabstandet sind, die im Wesentlichen der Distanz der Raupenschiffe (1200A) in der ausgefahrenen Position in der Fahrzeugbreitenrichtung entspricht; und
zumindest zwei bogenförmige Übergangselemente (3120), wobei jedes Übergangselement (3120) an einem oberen Endbereich einer jeweiligen Fahrschiene (3110) angeordnet ist und dazu ausgelegt ist, die jeweilige Fahrschiene (3110) mit der ersten oberen Fahrbahn (2000') zu verbinden,
oder
wobei die Fahrschienenanordnung ferner umfasst:
zumindest ein Vertikalfahrmodul (5100), wobei das Vertikalfahrmodul (5100) umfasst:
ein erstes Paar von Fahrschienen (5110) und ein zweites Paar von Fahrschienen (5210), die parallel zueinander angeordnet sind und dazu ausgelegt sind, in formschlüssigem und/oder kraftschlüssigem Eingriff mit Antriebsraupen (1210C) eines Raupenfahrzeugs (1000C) nach Anspruch 8 zu sein, und an einer umgebenden Tragstruktur (T) derart befestigt zu sein, dass sie vertikal von einer unteren Fahrbahn (2000) zu einer ersten oberen Fahrbahn (2000') verlaufen, wobei sich die erste obere Fahrbahn (2000') in einer vorbestimmten Höhe relativ zu der unteren Fahrbahn (2000) befindet, und
zumindest zwei Übergangselemente (5120), die dazu ausgelegt sind, an der ersten oberen Fahrbahn (2000') in der vorbestimmten Höhe benachbart zu oberen Endbereichen der Fahrschienen (5110, 5210) derart schräg angeordnet zu sein, dass die Struktur jedes Übergangselements einer Struktur (5111, 5211) einer entsprechenden Fahrschiene (5110, 5210) gegenüberliegt,
wobei die Fahrschienen jedes Paars von Fahrschienen (5110, 5210) voneinander um eine Distanz beabstandet sind, die im Wesentlichen der Distanz der Raupenschiffe (1200C) in der ausgefahrenen Position in der Fahrzeugbreitenrichtung entspricht, und
wobei das erste Paar von Fahrschienen (5110) von dem zweiten Paar von Fahrschienen (5210) um eine Distanz beabstandet ist, die im Wesentlichen der Distanz der Neigungsachsen (NA) der Raupenschiffe (1200C) in der Geradeausfahrposition in der Fahrzeuglängsrichtung entspricht.

10. Fahrschienenanordnung (3000, 4000, 5000) nach Anspruch 9, wobei die Struktur (3111) in Form einer strukturierten Oberfläche einer massiven Fahrschiene (3110) bereitgestellt ist.

11. Fahrschienenanordnung (4000) nach Anspruch 9, die zumindest ein Schrägfahrmodul umfasst, umfassend ein erstes Schrägfahrmodul (4100) und ein zweites Schrägfahrmodul (4200), die relativ zueinander derart angeordnet sind, dass sie jeweils schräg von der unteren Fahrbahn (2000) zu der ersten oberen Fahrbahn (2000') verlaufen,
wobei die Fahrschienen (4110, 4210) des ersten Schrägfahrmoduls (4100) und des zweiten Schrägfahrmoduls (4200) im Wesentlichen parallel zueinander sind, und
wobei das erste Schrägfahrmodul (4100) und das zweite Schrägfahrmodul (4200) horizontal um eine Distanz beabstandet sind, die im Wesentlichen einer Distanz der Neigungsachsen (NA) der Raupenschiffe (1200B) in einer Geradeausfahrposition in der Fahrzeuglängsrichtung entspricht.

12. Fahrschienenanordnung (3000, 4000) nach Anspruch 9 oder 11, die zumindest ein Schrägfahrmodul umfasst, wobei eine Mehrzahl von Schrägfahrmodulen (3100, 3100', 4100, 4100', 4200, 4200') zur Verbindung der unteren Fahrbahn (2000) mit der ersten oberen Fahrbahn (2000') sowie der ersten oberen Fahrbahn (2000') mit einer darüber angeordneten zweiten oberen Fahrbahn (2000") derart übereinander angeordnet ist, dass ihre Fahrschienen (3110, 3110', 4110, 4110', 4210, 4210') paarweise miteinander fluchten, und
wobei Durchgangsöffnungen (3130', 4130', 4230') zwischen den übereinander angeordneten Schrägfahrmodulen vorgesehen sind, die derart dimensioniert sind, dass es den Raupenschiffen (1200A,B) ermöglicht wird, zwischen einer Schrägfahrposition und einer Horizontalfahrposition zum Einfahren in die oder zum Ausfahren aus der Fahrschienenanordnung (3000, 4000) zu wechseln, und dass die Raupenschiffe (1200A,B) bei einer Überquerung der Durchgangsöffnungen (3130', 4130', 4230') in der Schrägfahrposition ununterbrochen mit zumindest einem Schrägfahrmodul (3100, 3100', 4100, 4100', 4200, 4200') in Kontakt sind.

13. Fahrschienenanordnung (5000) nach Anspruch 9, die zumindest ein Vertikalfahrmodul umfasst, wobei die Struktur (5111, 5211) an jeder der Fahrschienen (5110, 5210) derart angeordnet ist, dass bei einem Verlagern der Raupenschiffe (1200C) in Richtung der Struktur (5111, 5211) in einer Vertikalfahrposition mittels der Klemmmittel (1250C) eine Klemmkraft oder Spannkraft zwischen den Raupenschiffen (1200C) und den Fahrschienen (5110, 5210) in horizontaler Richtung erzeugt wird.

14. Fahrschienenanordnung (5000) nach Anspruch 9 oder 13, die zumindest ein Vertikalfahrmodul umfasst, wobei eine Mehrzahl von Vertikalfahrmodulen (5100, 5100') zur Verbindung der unteren Fahrbahn (2000) mit der ersten oberen Fahrbahn (2000') sowie der ersten oberen Fahrbahn (2000') mit einer darüber angeordneten zweiten oberen Fahrbahn (2000") derart übereinander angeordnet ist, dass ihre Fahrschienen (5110, 5110', 5210, 5210') paarweise miteinander fluchten, und
wobei Durchgangsöffnungen (5130', 5230') zwischen den übereinander angeordneten Vertikalfahrmodulen (5100, 5100') vorgesehen sind, die derart dimensioniert sind, dass es den Raupenschiffen (1200C) ermöglicht wird, zwischen einer Vertikalfahrposition und einer Horizontalfahrposition zum Einfahren in die oder zum Ausfahren aus der Fahrschienenanordnung (5000) zu wechseln, und dass die Raupenschiffe (1200C) bei einer Überquerung der Durchgangsöffnungen (5130', 5230') in der Vertikalfahrposition ununterbrochen mit zumindest einem Vertikalfahrmodul (5100, 5100') in Kontakt sind.

15. Fahrzeugsystem, umfassend ein Raupenfahrzeug (1000A,B,C) nach einem der Ansprüche 1 bis 8 und eine Fahrschienenanordnung (3000, 4000, 5000) nach einem der Ansprüche 9 bis 14.

16. Verfahren zum Befahren einer Fahrschienenanordnung (3000, 4000, 5000) nach einem der Ansprüche 9 bis 14 mit einem Raupenfahrzeug (1000A,B;C) nach einem der Ansprüche 1 bis 8, umfassend die folgenden Schritte:
Annähern des Raupenfahrzeugs (1000A,B,C) an die Fahrschienenanordnung (3000, 4000, 5000) auf einer unteren Fahrbahn (2000) oder einer oberen Fahrbahn (2000');
Verlagern der Raupenschiffe (1200A,B;C) entlang einer jeweiligen Neigungsachse (NA) von einer eingefahrenen Position in eine ausgefahrene Position,
Neigen der Raupenschiffe (1200A,B,C) um die jeweilige Neigungsachse (NA) um einen vorbestimmten Winkel von einer Horizontalfahrposition in eine Schrägfahrposition oder in eine Vertikalfahrposition,
Einfahren in die Fahrschienenanordnung (3000, 4000, 5000) mittels Eingreifen der Antriebsraupen (1210A,B,C) der Raupenschiffe (1200A,B,C) mit der Struktur (3111, 4111, 4211, 5111, 5211) der jeweiligen Fahrschienen (3110, 4110, 4210, 5110, 5210),
Befahren der Fahrschienenanordnung (3000, 4000, 5000) zwischen einem Bereich der unteren Fahrbahn (2000) und einem Bereich der oberen Fahrbahn (2000'),
Eingreifen der Antriebsraupen (1210A,B,C) der Raupenschiffe (1200A,B,C) mit der Struktur der jeweiligen Übergangselemente (3120, 4120, 4220, 5120),
Befahren der Übergangselemente (3120, 4120, 4220, 5120) und Neigen der Raupenschiffe (1200A,B,C) um die jeweilige Neigungsachse (NA) in die Horizontalfahrposition, und
Ausfahren aus der Fahrschienenanordnung (3000, 4000, 5000) und Befahren der oberen Fahrbahn (2000') oder der unteren Fahrbahn (2000).

17. Verfahren nach Anspruch 16 zum Befahren der Fahrschienenanordnung (3000, 4000, 5000) nach einem der Ansprüche 9, 13 oder 14, die zumindest ein Vertikalfahrmodul umfasst, mit dem Raupenfahrzeug (1000A,B,C) nach Anspruch 8, wobei der Schritt des Eingreifens der Antriebsraupen (1210A,B,C) der Raupenschiffe (1200A,B,C) mit der Struktur der jeweiligen Übergangselemente (3120, 4120, 4220, 5120) die folgenden Teilschritte umfasst:
Verlagern von zumindest einem Raupenschiff (1200A,B,C) mittels seiner Klemmmittel (1250C) entlang der Klemmachse (KA) zwischen der Struktur (3111, 4111, 4211, 5111) der jeweiligen Fahrschiene (3110, 4110, 4210, 5110) und der Struktur des jeweiligen Übergangselements (3120, 4120, 4220, 5120), und
Aufrechterhalten des Eingriffs von zumindest drei Raupenschiffen (1200A,B,C) mit einer der Strukturen (3111, 4111, 4211, 5111, 5211) der jeweiligen Fahrschiene (3110, 4110, 4210, 5110, 5211) oder des jeweiligen Übergangselements (3120, 4120, 4220, 5120).

18. Verfahren nach Anspruch 16 oder 17, ferner umfassend, nach dem Verlassen der Fahrschienenanordnung (3000, 4000, 5000), einen Schritt des Verlagerns der Raupenschiffe (1200A,B,C) entlang einer jeweiligen Neigungsachse (NA) von einer ausgefahrenen Position in eine eingefahrene Position.

## Claims

1. Tracked vehicle (1000A,B,C) comprising:
a load assembly (1100A,B,C);
at least two drive tracks (1210A,B,C) movably mounted to the load assembly (1100A,B,C) to execute a movement along an orbit of the respective drive track (1210A,B,C) for a travel of the tracked vehicle (1000A,B,C) along a running direction;
**characterized in that** each drive track (1210A,B,C) is formed at a respective caterpillar assembly (1200A,B,C), and the tracked vehicle (1000A,B,C) further comprises:
tilting means (1220A,B,C) for tilting the caterpillar assemblies (1200A,B,C) about a respective inclination axis (NA) extending substantially perpendicular to the movement direction of the respective drive track (1210A,B,C); and
shifting means (1230A,B,C) for shifting the caterpillar assemblies (1200A,B,C) along the respective inclination axis (NA) between a retracted position and an extended position, wherein, in the retracted position, the caterpillar assemblies (1200A,B,C) are located below an underbody (1110A,B,C) of the load assembly (1100A,B,C), and
wherein, in the extended position, the caterpillar assemblies (1200A,B,C) overhang the load assembly (1100A,B,C) on opposite sides in the vehicle width direction.

2. Tracked vehicle (1000A,B,C) according to claim 1, wherein the tracked vehicle (1000A,B,C) further comprises steering means (1240A,B,C) for changing the running direction of the tracked vehicle (1000A,B,C).

3. Tracked vehicle (1000A,B,C) according to claim 2, wherein the steering means (1240A,B,C) are adapted to change the running direction of the tracked vehicle (1000A,B,C) by different rotation speeds and/or rotation directions of the drive tracks (1210A,B,C).

4. Tracked vehicle (1000A,B,C) according to claim 2 or 3, wherein the steering means (1240A,B,C) are adapted to change the running direction of the tracked vehicle (1000A,B,C) by rotating the caterpillar assemblies (1200A,B,C) about respective associated steering axes (LA).

5. Tracked vehicle (1000A,B,C) according to claim 4, wherein, in the retracted position, the caterpillar assemblies (1200A,B,C) are pierced by their respective steering axis (LA) in a front end portion (1201A, B, C) or in a rear end portion (1202A, B, C).

6. Tracked vehicle (1000A,B,C) according to one of the preceding claims, wherein the caterpillar assemblies (1200A,B,C) are pierced by their respective inclination axis (NA) in a front end portion (1201A,B,C) or in a rear end portion (1202A,B,C).

7. Tracked vehicle (1000A,B,C) according to any one of claims 4 to 6, wherein the respective steering axis (LA) of each caterpillar assembly (1200A,B,C) intersects its respective inclination axis (NA).

8. Tracked vehicle (1000A,B,C) according to one of the preceding claims, wherein the tracked vehicle (1000A,B,C) further comprises:
clamping means (1250C) for shifting at least two caterpillar assemblies (1200A,B,C) arranged side by side in the vehicle width direction along respective clamping axes (KA) extending substantially in a vehicle longitudinal direction.

9. Running rail arrangement (3000, 4000, 5000), comprising:
at least two running rails (3110) which are arranged substantially parallel to one another,
wherein each of the running rails (3110) having a structure (3111) with projections and depressions, which is adapted to engage in a form-fitting and/or force-fitting manner with drive tracks (1210A) of a tracked vehicle (1000A) according to any one of claims 1 to 8,
wherein the running rail arrangement further comprises:
at least one oblique running module (3100), wherein the oblique running module (3100) comprises:
the at least two running rails (3110), which are designed to be attached to a surrounding support structure (T) in such a way that they extend parallel to one another and
obliquely from a lower runway (2000) to a first upper runway (2000'), wherein the first upper runway (2000') is located at a predetermined height relative to the lower runway (2000), and wherein the two running rails (3110) are horizontally spaced from each other by a distance which substantially corresponds to the distance of the caterpillar assemblies (1200A) in the extended position in the vehicle width direction; and
at least two arc-shaped transition elements (3120), wherein each transition element (3120) is arranged at an upper end region of a respective running rail (3110) and is designed to connect the respective running rail (3110) to the first upper runway (2000'), or
wherein the running rail arrangement further comprises:
at least one vertical running module (5100), wherein the vertical running module (5100) comprises:
a first pair of running rails (5110) and a second pair of running rails (5210), which are arranged parallel to one another and are designed to be in form-fitting and/or force-fitting engagement with drive tracks (1210C) of a tracked vehicle (1000C) according to claim 8, and to be attached to a surrounding support structure (T) such that they extend vertically from a lower runway (2000) to a first upper runway (2000'), wherein the first upper runway (2000') is located at a predetermined height relative to the lower runway (2000), and
at least two transition elements (5120), which are designed to be arranged at the first upper runway (2000') in the predetermined height adjacent to upper end regions of the running rails (5110, 5210) obliquely in such a way that the structure of each transition element lies opposite a structure (5111, 5211) of a corresponding running rail (5110, 5210),
wherein the running rails of each pair of running rails (5110, 5210) are spaced from one another by a distance which substantially corresponds to the distance of the caterpillar assemblies (1200C) in the extended position in the vehicle width direction, and
wherein the first pair of running rails (5110) is spaced from the second pair of running rails (5210) by a distance which substantially corresponds to the distance of the inclination axes (NA) of the caterpillar assemblies (1200C) in the straight running position in the vehicle longitudinal direction.

10. Running rail arrangement (3000, 4000, 5000) according to claim 9, wherein the structure (3111) is provided in the form of a structured surface of a solid running rail (3110).

11. Running rail arrangement (4000) according to claim 9, which comprises at least one oblique running module, comprising a first oblique running module (4100) and a second oblique running module (4200), which are arranged relative to one another in such a way that they each extend obliquely from the lower runway (2000) to the first upper runway (2000'),
wherein the running rails (4110, 4210) of the first oblique running module (4100) and the second oblique running module (4200) are substantially parallel to one another, and wherein the first oblique running module (4100) and the second oblique running module (4200) are horizontally spaced by a distance which corresponds substantially to a distance of the inclination axes (NA) of the caterpillar assemblies (1200B) in a straight running position in the vehicle longitudinal direction.

12. Running rail arrangement (3000, 4000) according to claim 9 or 11, which comprises at least one oblique running module, wherein a plurality of oblique running modules (3100, 3100', 4100, 4100', 4200, 4200') for connecting the lower runway (2000) with the first upper runway (2000') as well as the first upper runway (2000') with a second upper runway (2000") arranged above it are arranged above each other in such a way that their running rails (3110, 3110', 4110, 4110', 4210, 4210') are aligned in pairs, and
wherein passage openings (3130', 4130', 4230') are provided between the oblique running modules arranged above each other, which are dimensioned in such a way that it is possible for the caterpillar assemblies (1200A,B) to switch between an oblique running position and a horizontal running position for running into or out of the running rail arrangement (3000, 4000), and that the caterpillar assemblies (1200A,B) in the oblique running position are continuously in contact with at least one oblique running module (3100, 3100', 4100, 4100', 4200, 4200') when crossing the passage openings (3130', 4130', 4230').

13. Running rail arrangement (5000) according to claim 9, which comprises at least one vertical running module, wherein the structure (5111, 5211) is arranged on each of the running rails (5110, 5210) such that, upon shifting the caterpillar assemblies (1200C) in the direction of the structure (5111, 5211) in a vertical running position by means of the clamping means (1250C), a clamping force or tension force is generated between the caterpillar assemblies (1200C) and the running rails (5110, 5210) in a horizontal direction.

14. Running rail arrangement (5000) according to claim 9 or 13, which comprises at least one vertical running module, wherein a plurality of vertical running modules (5100, 5100') for connecting the lower runway (2000) to the first upper runway (2000') and the first upper runway (2000') to a second upper runway (2000") arranged above it are arranged above each other in such a way that their running rails (5110, 5110', 5210, 5210') are aligned in pairs with one another, and
wherein passage openings (5130', 5230') are provided between the vertical running modules (5100, 5100') arranged above each other, which are dimensioned in such a way that it is possible for the caterpillar assemblies (1200C) to switch between a vertical running position and a horizontal running position for running into or out of the running rail arrangement (5000), and that the caterpillar assemblies (1200C) are continuously in contact with at least one vertical running module (5100, 5100') when crossing the passage openings (5130', 5230') in the vertical running position.

15. Vehicle system, comprising a tracked vehicle (1000A,B,C) according to any one of claims 1 to 8 and a running rail arrangement (3000, 4000, 5000) according to any one of claims 9 to 14.

16. Method for running on a running rail arrangement (3000, 4000, 5000) according to any one of claims 9 to 14 with a tracked vehicle (1000A,B,C) according to any one of claims 1 to 8, comprising the following steps:
Approaching the tracked vehicle (1000A,B,C) to the running rail arrangement (3000, 4000, 5000) on a lower runway (2000) or an upper runway (2000');
Shifting the caterpillar assemblies (1200A,B,C) along a respective inclination axis (NA) from a retracted position into an extended position,
Tilting the caterpillar assemblies (1200A,B,C) about the respective inclination axis (NA) by a predetermined angle from a horizontal running position into an oblique running position or into a vertical running position,
Entering into the running rail arrangement (3000, 4000, 5000) by means of engagement of the drive tracks (1210A,B,C) of the caterpillar assemblies (1200A,B,C) with the structure (3111, 4111, 4211, 5111, 5211) of the respective running rails (3110, 4110, 4210, 5110, 5210),
Running on the running rail arrangement (3000, 4000, 5000) between a region of the lower runway (2000) and a region of the upper runway (2000'),
Engaging the drive tracks (1210A,B,C) of the caterpillar assemblies (1200A,B,C) with the structure of the respective transition elements (3120, 4120, 4220, 5120),
Running on the transition elements (3120, 4120, 4220, 5120) and tilting the caterpillar assemblies (1200A,B,C) about the respective inclination axis (NA) into the horizontal running position, and
Exiting from the running rail arrangement (3000, 4000, 5000) and running on the upper runway (2000') or the lower runway (2000).

17. Method according to claim 16 for running on the running rail arrangement (3000, 4000, 5000) according to any one of claims 9, 13 or 14, which comprises at least one vertical running module, with the tracked vehicle (1000A,B,C) according to claim 8, wherein the step of engaging the drive tracks (1210A,B,C) of the caterpillar assemblies (1200A,B,C) with the structure of the respective transition elements (3120, 4120, 4220, 5120) comprises the following sub-steps:
Shifting at least one caterpillar assembly (1200A,B,C) by means of its clamping means (1250C) along the clamping axis (KA) between the structure (3111, 4111, 4211, 5111) of the respective running rail (3110, 4110, 4210, 5110) and the structure of the respective transition element (3120, 4120, 4220, 5120), and
Maintaining the engagement of at least three caterpillar assemblies (1200A,B,C) with one of the structures (3111, 4111, 4211, 5111, 5211) of the respective running rail (3110, 4110, 4210, 5110, 5211) or of the respective transition element (3120, 4120, 4220, 5120).

18. Method according to claim 16 or 17, further comprising, after leaving the running rail arrangement (3000, 4000, 5000), a step of shifting the caterpillar assemblies (1200A,B,C) along a respective inclination axis (NA) from an extended position into a retracted position.

## Revendications

1. Véhicule à chenilles (1000A,B,C), comprenant :
un ensemble de charge (1100A,B,C) ;
au moins deux chenilles d'entraînement (1210A,B,C), qui sont montées de manière mobile sur l'ensemble de charge (1100A,B,C) pour exécuter un mouvement le long d'une orbite de la chenille d'entraînement respective (1210A,B,C) pour un déplacement du véhicule à chenilles (1000A,B,C) le long d'une direction de circulation ;
**caractérisé en ce que** chaque chenille d'entraînement (1210A,B,C) est formée sur un ensemble chenille respectif (1200A,B,C) et que le véhicule à chenilles (1000A,B,C) comprend en outre :
des moyens d'inclinaison (1220A,B,C) pour incliner les ensembles chenilles (1200A,B,C) autour d'un axe d'inclinaison respectif (NA), qui s'étend essentiellement perpendiculairement à la direction de mouvement de la chenille d'entraînement respective (1210A,B,C) ; et
des moyens de déplacement (1230A,B,C) pour déplacer les ensembles chenilles (1200A,B,C) le long de l'axe d'inclinaison respectif (NA) entre une position rentrée et une position sortie,
les ensembles chenilles (1200A,B,C) étant disposés dans la position rentrée au-dessous d'un soubassement (1110A,B,C) de l'ensemble de charge (1100A,B,C), et
les ensembles chenilles (1200A,B,C) dépassant de l'ensemble de charge (1100A,B,C) sur des côtés opposés dans la direction de la largeur du véhicule dans la position sortie.

2. Véhicule à chenilles (1000A,B,C) selon la revendication 1, le véhicule à chenilles (1000A,B,C) comprenant en outre des moyens de direction (1240A,B,C) pour modifier la direction de déplacement du véhicule à chenilles (1000A,B,C).

3. Véhicule à chenilles (1000A,B,C) selon la revendication 2, les moyens de direction (1240A,B,C) étant conçus pour modifier la direction de déplacement du véhicule à chenilles (1000A,B,C) par des vitesses de rotation et/ou des sens de rotation différents des chenilles d'entraînement (1210A,B,C).

4. Véhicule à chenilles (1000A,B,C) selon la revendication 2 ou 3, les moyens de direction (1240A,B,C) étant conçus pour modifier la direction de déplacement du véhicule à chenilles (1000A,B,C) par rotation des ensembles chenilles (1200A,B,C) autour d'axes de direction (LA) respectivement associés.

5. Véhicule à chenilles (1000A,B,C) selon la revendication 4, les ensembles chenilles (1200A,B,C) étant traversés dans la position rentrée par leur axe de direction respectif (LA) dans une zone d'extrémité avant (1201A,B,C) ou dans une zone d'extrémité arrière (1202A,B,C).

6. Véhicule à chenilles (1000A,B,C) selon l'une des revendications précédentes, les ensembles chenilles (1200A,B,C) étant traversés par leur axe d'inclinaison respectif (NA) dans une zone d'extrémité avant (1201A,B,C) ou dans une zone d'extrémité arrière (1202A,B,C).

7. Véhicule à chenilles (1000A,B,C) selon l'une des revendications 4 à 6, l'axe de direction respectif (LA) de chaque ensemble chenille (1200A,B,C) coupant son axe d'inclinaison respectif (NA).

8. Véhicule à chenilles (1000A,B,C) selon l'une des revendications précédentes, le véhicule à chenilles (1000A,B,C) comprenant en outre :
des moyens de serrage (1250C) pour déplacer au moins deux ensembles chenilles (1200A,B,C), qui sont disposés côte à côte dans la direction de la largeur du véhicule, le long d'axes de serrage respectifs (KA), qui s'étendent essentiellement dans une direction longitudinale du véhicule.

9. Agencement de rails de roulement (3000, 4000, 5000), comprenant :
au moins deux rails de roulement (3110), qui sont disposés essentiellement parallèlement l'un à l'autre,
chacun des rails de roulement (3110) présentant une structure (3111) avec des saillies et des creux, qui est conçue pour être en engagement par coopération de forme et/ou par liaison de force avec des chenilles d'entraînement (1210A) d'un véhicule à chenilles (1000A) selon l'une des revendications 1 à 8,
l'agencement de rails de roulement comprenant en outre :
au moins un module de déplacement oblique (3100), le module de déplacement oblique (3100) comprenant :
les au moins deux rails de roulement (3110), qui sont conçus pour être fixés à une structure porteuse environnante (T) de telle sorte qu'ils s'étendent parallèlement l'un à l'autre et en oblique d'une voie de circulation inférieure (2000) à une première voie de circulation supérieure (2000'), la première voie de circulation supérieure (2000') se trouvant à une hauteur prédéterminée par rapport à la voie de circulation inférieure (2000), et les deux rails de roulement (3110) étant espacés horizontalement l'un de l'autre d'une distance qui correspond essentiellement à la distance des ensembles chenilles (1200A) dans la position sortie dans la direction de la largeur du véhicule ; et
au moins deux éléments de transition (3120) en forme d'arc, chaque élément de transition (3120) étant disposé à une zone d'extrémité supérieure d'un rail de roulement respectif (3110) et étant conçu pour relier le rail de roulement respectif (3110) à la première voie de circulation supérieure (2000'),
ou
l'agencement de rails de roulement comprenant en outre :
au moins un module de déplacement vertical (5100), le module de déplacement vertical (5100) comprenant :
une première paire de rails de roulement (5110) et une deuxième paire de rails de roulement (5210), qui sont disposés parallèlement l'un à l'autre et sont conçus pour être en engagement par coopération de forme et/ou par liaison de force avec des chenilles d'entraînement (1210C) d'un véhicule à chenilles (1000C) selon la revendication 8, et pour être fixés à une structure porteuse environnante (T) de telle sorte qu'ils s'étendent verticalement d'une voie de circulation inférieure (2000) à une première voie de circulation supérieure (2000'), la première voie de circulation supérieure (2000') se trouvant à une hauteur prédéterminée par rapport à la voie de circulation inférieure (2000), et
au moins deux éléments de transition (5120), qui sont conçus pour être disposés en oblique sur la première voie de circulation supérieure (2000') à la hauteur prédéterminée de manière adjacente à des zones d'extrémité supérieures des rails de roulement (5110, 5210) de telle sorte que la structure de chaque élément de transition soit opposée à une structure (5111, 5211) d'un rail de roulement correspondant (5110, 5210),
les rails de roulement de chaque paire de rails de roulement (5110, 5210) étant espacés l'un de l'autre d'une distance qui correspond essentiellement à la distance des ensembles chenilles (1200C) dans la position sortie dans la direction de la largeur du véhicule, et
la première paire de rails de roulement (5110) étant espacée de la deuxième paire de rails de roulement (5210) d'une distance qui correspond essentiellement à la distance des axes d'inclinaison (NA) des ensembles chenilles (1200C) dans la position de déplacement en ligne droite dans la direction longitudinale du véhicule.

10. Agencement de rails de roulement (3000, 4000, 5000) selon la revendication 9, la structure (3111) étant fournie sous la forme d'une surface structurée d'un rail de roulement massif (3110).

11. Agencement de rails de roulement (4000) selon la revendication 9, qui comprend au moins un module de déplacement oblique, comprenant un premier module de déplacement oblique (4100) et un deuxième module de déplacement oblique (4200), qui sont disposés l'un par rapport à l'autre de telle sorte qu'ils s'étendent chacun en oblique de la voie de circulation inférieure (2000) à la première voie de circulation supérieure (2000'),
les rails de roulement (4110, 4210) du premier module de déplacement oblique (4100) et du deuxième module de déplacement oblique (4200) étant essentiellement parallèles les uns aux autres, et
le premier module de déplacement oblique (4100) et le deuxième module de déplacement oblique (4200) étant espacés horizontalement d'une distance qui correspond essentiellement à une distance des axes d'inclinaison (NA) des ensembles chenilles (1200B) dans une position de déplacement en ligne droite dans la direction longitudinale du véhicule.

12. Agencement de rails de roulement (3000, 4000) selon la revendication 9 ou 11, qui comprend au moins un module de déplacement oblique, une pluralité de modules de déplacement oblique (3100, 3100', 4100, 4100', 4200, 4200') pour relier la voie de circulation inférieure (2000) à la première voie de circulation supérieure (2000') ainsi que la première voie de circulation supérieure (2000') à une deuxième voie de circulation supérieure (2000") disposée au-dessus étant disposée les uns au-dessus des autres de telle sorte que leurs rails de roulement (3110, 3110', 4110, 4110', 4210, 4210') soient alignés par paires, et
des ouvertures de passage (3130', 4130', 4230') étant prévues entre les modules de déplacement oblique disposés les uns au-dessus des autres, lesquelles sont dimensionnées de telle sorte qu'il est permis aux ensembles chenilles (1200A,B) de changer entre une position de déplacement oblique et une position de déplacement horizontal pour entrer dans ou sortir de l'agencement de rails de roulement (3000, 4000), et que les ensembles chenilles (1200A,B) soient en contact ininterrompu avec au moins un module de déplacement oblique (3100, 3100', 4100, 4100', 4200, 4200') lors d'une traversée des ouvertures de passage (3130', 4130', 4230') dans la position de déplacement oblique.

13. Agencement de rails de roulement (5000) selon la revendication 9, qui comprend au moins un module de déplacement vertical, la structure (5111, 5211) étant disposée sur chacun des rails de roulement (5110, 5210) de telle sorte que, lors d'un déplacement des ensembles chenilles (1200C) en direction de la structure (5111, 5211) dans une position de déplacement vertical au moyen des moyens de serrage (1250C), une force de serrage ou une force de tension est générée entre les ensembles chenilles (1200C) et les rails de roulement (5110, 5210) dans la direction horizontale.

14. Agencement de rails de roulement (5000) selon la revendication 9 ou 13, qui comprend au moins un module de déplacement vertical, une pluralité de modules de déplacement vertical (5100, 5100') pour relier la voie de circulation inférieure (2000) à la première voie de circulation supérieure (2000') ainsi que la première voie de circulation supérieure (2000') à une deuxième voie de circulation supérieure (2000") disposée au-dessus étant disposée les uns au-dessus des autres de telle sorte que leurs rails de roulement (5110, 5110', 5210, 5210') soient alignés par paires, et
des ouvertures de passage (5130', 5230') étant prévues entre les modules de déplacement vertical (5100, 5100') disposés les uns au-dessus des autres, lesquelles sont dimensionnées de telle sorte qu'il est permis aux ensembles chenilles (1200C) de changer entre une position de déplacement vertical et une position de déplacement horizontal pour entrer dans ou sortir de l'agencement de rails de roulement (5000), et que les ensembles chenilles (1200C) soient en contact ininterrompu avec au moins un module de déplacement vertical (5100, 5100') lors d'une traversée des ouvertures de passage (5130', 5230') dans la position de déplacement vertical.

15. Système de véhicule, comprenant un véhicule à chenilles (1000A,B,C) selon l'une des revendications 1 à 8 et un agencement de rails de roulement (3000, 4000, 5000) selon l'une des revendications 9 à 14.

16. Procédé pour circuler sur un agencement de rails de roulement (3000, 4000, 5000) selon l'une des revendications 9 à 14 avec un véhicule à chenilles (1000A,B,C) selon l'une des revendications 1 à 8, comprenant les étapes suivantes :
Approche du véhicule à chenilles (1000A,B,C) vers l'agencement de rails de roulement (3000, 4000, 5000) sur une voie de circulation inférieure (2000) ou une voie de circulation supérieure (2000') ;
Déplacement des ensembles chenilles (1200A,B,C) le long d'un axe d'inclinaison respectif (NA) d'une position rentrée à une position sortie,
Inclinaison des ensembles chenilles (1200A,B,C) autour de l'axe d'inclinaison respectif (NA) d'un angle prédéterminé d'une position de déplacement horizontal à une position de déplacement oblique ou à une position de déplacement vertical,
Entrée dans l'agencement de rails de roulement (3000, 4000, 5000) au moyen de l'engagement des chenilles d'entraînement (1210A,B,C) des ensembles chenilles (1200A,B,C) avec la structure (3111, 4111, 4211, 5111, 5211) des rails de roulement respectifs (3110, 4110, 4210, 5110, 5210),
Circulation sur l'agencement de rails de roulement (3000, 4000, 5000) entre une zone de la voie de circulation inférieure (2000) et une zone de la voie de circulation supérieure (2000'),
Engagement des chenilles d'entraînement (1210A,B,C) des ensembles chenilles (1200A,B,C) avec la structure des éléments de transition respectifs (3120, 4120, 4220, 5120),
Passage sur les éléments de transition (3120, 4120, 4220, 5120) et inclinaison des ensembles chenilles (1200A,B,C) autour de l'axe d'inclinaison respectif (NA) vers la position de déplacement horizontal, et
Sortie de l'agencement de rails de roulement (3000, 4000, 5000) et circulation sur la voie de circulation supérieure (2000') ou la voie de circulation inférieure (2000).

17. Procédé selon la revendication 16 pour circuler sur l'agencement de rails de roulement (3000, 4000, 5000) selon l'une des revendications 9, 13 ou 14, qui comprend au moins un module de déplacement vertical, avec le véhicule à chenilles (1000A,B,C) selon la revendication 8, l'étape d'engagement des chenilles d'entraînement (1210A,B,C) des ensembles chenilles (1200A,B,C) avec la structure des éléments de transition respectifs (3120, 4120, 4220, 5120) comprenant les étapes partielles suivantes :
Déplacement d'au moins un ensemble chenille (1200A,B,C) au moyen de ses moyens de serrage (1250C) le long de l'axe de serrage (KA) entre la structure (3111, 4111, 4211, 5111) du rail de roulement respectif (3110, 4110, 4210, 5110) et la structure de l'élément de transition respectif (3120, 4120, 4220, 5120), et
Maintien de l'engagement d'au moins trois ensembles chenilles (1200A,B,C) avec l'une des structures (3111, 4111, 4211, 5111, 5211) du rail de roulement respectif (3110, 4110, 4210, 5110, 5211) ou de l'élément de transition respectif (3120, 4120, 4220, 5120).

18. Procédé selon la revendication 16 ou 17, comprenant en outre, après la sortie de l'agencement de rails de roulement (3000, 4000, 5000), une étape de déplacement des ensembles chenilles (1200A,B,C) le long d'un axe d'inclinaison respectif (NA) d'une position sortie vers une position rentrée.
